(19) Europäisches Patentamt
European Patent Office
Office européen des brevets

(11) **EP 1 847 037 B1**

(12) **EUROPÄISCHE PATENTSCHRIFT**

(45) Veröffentlichungstag und Bekanntmachung des Hinweises auf die Patenterteilung:
**26.10.2011 Patentblatt 2011/43**

(21) Anmeldenummer: 06707859.2

(22) Anmeldetag: **26.01.2006**

(51) Int Cl.:
**H04B 7/02** *(2006.01)*

(86) Internationale Anmeldenummer:
**PCT/EP2006/050474**

(87) Internationale Veröffentlichungsnummer:
**WO 2006/084795 (17.08.2006 Gazette 2006/33)**

(54) **VERFAHREN ZUM ÜBERTRAGEN VON DATEN**

DATA TRANSMISSION METHOD

PROCEDE POUR TRANSMETTRE DES DONNEES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **10.02.2005 DE 102005006160**

(43) Veröffentlichungstag der Anmeldung:
**24.10.2007 Patentblatt 2007/43**

(73) Patentinhaber: **SIEMENS AKTIENGESELLSCHAFT**
**80333 München (DE)**

(72) Erfinder:
• **HINDELANG, Thomas**
**82256 Fürstenfeldbruck (DE)**
• **MICHEL, Jürgen**
**81737 München (DE)**
• **RAAF, Bernhard**
**82061 Neuried (DE)**

(56) Entgegenhaltungen:
**EP-A- 0 674 455       WO-A-95/06365**
**WO-A-2005/109675    DE-A1- 19 949 610**

**Beschreibung**

Die Erfindung bezieht sich auf ein Verfahren zum Übertragen von Daten.

In einem Mobilfunksystem, beispielsweise gemäß dem Standard Universal Mobile Telecommunication System (UMTS) werden Kommunikationsverbindungen über Funkschnittstellen zwischen mobilen Teilnehmerstationen (UE: User Equipment) und stationären Basisstationen (Node B) aufgebaut. Um die Mobilität einer Teilnehmerstation zu unterstützen, muss die Teilnehmerstation kontinuierlich Messungen hinsichtlich eines möglichen Übergangs (handover) zu einer anderen Basisstation durchführen. Diese Messungen werden sowohl in einem Ruhezustand (idle) als auch in einem Verbindungszustand (connected mode) durchgeführt. Daher wurde in UMTS in der Betriebsart FDD (Frequency Division Duplex) eine sogenannte komprimierte Betriebsart (Compressed mode/CM) eingeführt, um einer Teilnehmerstation Zwischenfrequenz-(inter frequency) und Zwischen-Funkzugriffstechnologie-(Radio Access Technology/RAT) Messungen auch während einer bestehenden Verbindung zu einem zugewiesenen Kanal (Dedicated Channel/DCH) in einem "dedicated Zustand" auch ohne eine zweite Empfangseinrichtung zu ermöglichen. Mit nur einer Empfangseinrichtung kann die Teilnehmerstation während einer bestehenden Verbindung z.B. Handover-Messungen zu einem GSM-Funkzugriffsnetz (GSM: Global System for Mobile Telecommunication) durchführen. Gemäß der momentanen Spezifikation können durch das Netz verschiedene Typen komprimierter Betriebsarten konfiguriert werden. Die erste Betriebsart wird als "Uplink (UL - Aufwärtsverbindung) nur im CM" bezeichnet. Diese Betriebsart für eine Aufwärtsverbindung nur im komprimierten Modus ist beispielsweise vorteilhaft, wenn ein Terminal bzw. eine Teilnehmerstation mit einer zweiten Empfangseinrichtung ausgestattet ist, diese Teilnehmerstation aber Messungen in beispielsweise dem GSM 1800-Frequenzband nahe dem UMTS-Frequenzband, auf dem eine bestehende Verbindung mit der ersten Empfangseinrichtung gehalten wird, durchführen muss. In einem solchen Fall würde eine kontinuierliche Übertragung der Teilnehmerstation auf einem zugewiesenen UMTS-Kanal (UE UMTS DCH Transmission) mit den GSM-Messungen, welche mit der zweiten Empfangseinrichtung durchgeführt werden, stark interferieren.

Eine zweite Betriebsart wird in der komprimierten Betriebsart für Aufwärts- und Abwärtsverbindungen verwendet und als UL/DL CM (DL: Downlink) bezeichnet. Diese Betriebsart wird verwendet, um das Erfordernis einer zweiten Empfangseinrichtung in der Teilnehmerstation und auch eines zweiten Synthesizers vermeiden zu können. Die dritte Betriebsart für Abwärtsverbindungen nur in komprimierter Betriebsart, die als "DL nur im CM" bezeichnet wird, kann angewendet werden, falls eine einzelne Empfangsstation mit zwei Synthesizern verwendet wird, um beispielsweise RAT-Zwischenmessungen im GSM 900-Frequenzband (GSM 900 Inter RAT Measurements) durchzuführen.

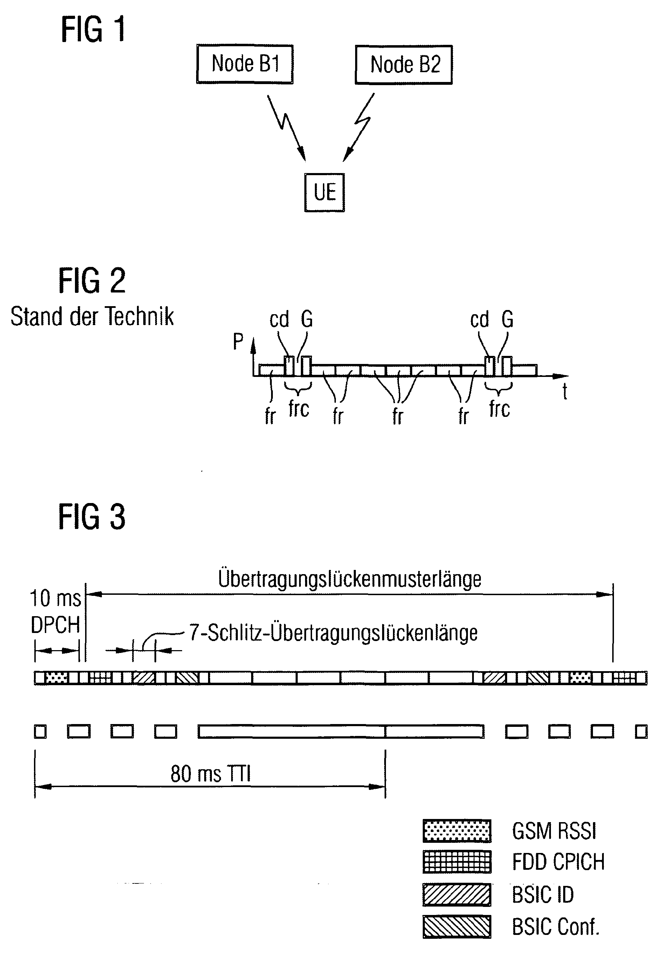

Fig. 2 stellt das Prinzip der komprimierten Betriebsart dar. Daten werden über eine Vielzahl von Rahmen fr (frame) übertragen, wobei derzeit zwischen einem und maximal sieben Schlitzen pro Rahmen fr durch die Teilnehmerstation zum Durchführen der Messungen belegt werden können. Diese Zeitschlitze können sich entweder in der Mitte des einzelnen Rahmens fr befinden oder über zwei Rahmen fr verteilt sein. Die Sendeleistung P wird in dem komprimierten Rahmen frc erhöht und dadurch die Verbindungsqualität konstant gehalten. Ein solcher komprimierter Rahmen besteht somit aus komprimierten Daten cd und einer Lücke G. Während der Lücke G kann die Teilnehmerstation eine Messung auf anderen Ressourcen, insbesondere anderen Frequenzen durchführen. Welche der Rahmen fr, frc komprimiert werden, wird durch das Netz bzw. Kommunikationssystem entschieden. Komprimierte Rahmen frc können periodisch oder auch auf Anforderung festgelegt werden. Die Rate und der Typ der komprimierten Rahmen frc sind variabel und hängen z. B. von der Art der durch die Teilnehmerstation durchzuführenden Messungen ab. Die Struktur der komprimierten Betriebsart wird einer bestimmten Teilnehmerstation zugewiesen, wobei die Strukturen im allgemeinen zwischen verschiedenen einer Vielzahl von Teilnehmerstationen innerhalb einer Zelle verschieden sind. Bei der komprimierten Betriebsart werden somit Daten über Rahmen fr übertragen, wobei ein Teil dieser Rahmen frc als komprimierte Rahmen frc Übertragungslücken G aufweist, in denen keine Daten gesendet werden.

Außerdem vorgesehen sind für ein solches Kommunikationssystem Multimedia-Rundfunkübertragungen und sogenannte Multicast-Dienste (MBMS: Multimedia Broadcast and Multicast Service), wobei es sich um einen Dienst handelt, bei dem die Basisstationen Informationen von allgemeinem Interesse auf einem gemeinsam verwendeten Kanal übertragen. Dieser gemeinsam verwendete Kanal wird von mehreren Teilnehmerstationen abgehört. Die allgemeine Information kann beispielsweise ähnlich zum Videotext im Fernsehen oder dem Inhalt sein, der über DAB (Digital Audio Broadcasting) übertragen wird, aber auch Dienste wie Multimedia einschließt. Beispielsweise können über einen solchen Dienst Tore eines Fußballspiels an eine Vielzahl von Teilnehmerstationen über einen einzigen Kanal übertragen werden. Bei der Übertragung über diesen Kanal ist jedoch eine kontinuierliche Übertragung von Daten ohne Übertragungslücken geplant. Während der Zeit von Empfangslücken, in denen eine empfangende Teilnehmerstation übertragene Daten nicht empfangen bzw. auswerten kann, sondern beispielsweise Handover-Messungen durchführen muss, sind also seitens der sendenden Station bei MBMS keine entsprechenden Übertragungs- bzw. Sendelücken vorgesehen, so dass ein Datenverlust während der Empfangslücken ein Datenverlust eintritt.

Mit der Einführung von MBMS für UMTS tritt somit das Problem auf, dass der physikalische Kanal (S-CCPCH), der für MBMS verwendet wird, die komprimierte Betriebsart (CM) nicht unterstützt. In den Fällen, in denen sich eine Teilnehmerstation in dem Zustand einer zugewiesenen Verbindung befindet, ist ersichtlich, dass in den Momenten, in denen die Teilnehmerstation Messungen im Fall einer komprimierten Betriebsart durchführt, Daten verloren gehen, welche zu dieser Zeit in dem entsprechenden S-CCPCH-Rahmen übertragen werden. Dies führt zu einem Verlust von MBMS-Daten, die über den Kanal S-CCPCH in kontinuierlicher Folge übertragen werden. Die Menge der verlorenen Daten hängt dabei von der Länge der Lücken, der Frequenz der Lücken und der Anzahl aktiver CM-Sequenzen in der Teilnehmerstation ab.

Fig. 3 zeigt ein Beispiel von Datenstrukturen, wie sie von einer Teilnehmerstation über eine zugewiesene Verbindung in der komprimierten Betriebsart über einen sogenannten DPCH-Kanal (DPCH: Dedicated Connection in CM) (UE ist in DCH Zustand) empfangen werden in der oberen Darstellung. Die untere Darstellung zeigt, welche Daten von der Teilnehmerstation als Empfänger in der Betriebsart mit Empfangslücken im Fall des Empfangs fortlaufender Daten über einen derartigen Rundfunkkanal S-CCPCH beim Empfang von MBMS empfangen bzw. nicht empfangen werden. Die Teilnehmerstation führt verschiedene Messungen durch, beispielsweise eine Messung der empfangenen Signalstärke von GSM-Signalen (GSM RSSI: Received Signal Strength Indicator). Weitere Messungen werden beispielsweise hinsichtlich eines Basisstations-Identifizierungs-Codes BSIC und hinsichtlich FDD-Zwischenfrequenzen durchgeführt. Ersichtlich ist, dass während dieser Messzeiten Daten auf dem Kanal S-CCPCH verloren gehen, falls die Teilnehmerstation nur eine einzige Empfängereinrichtung hat und daher die Empfangsfrequenz wechseln muss.

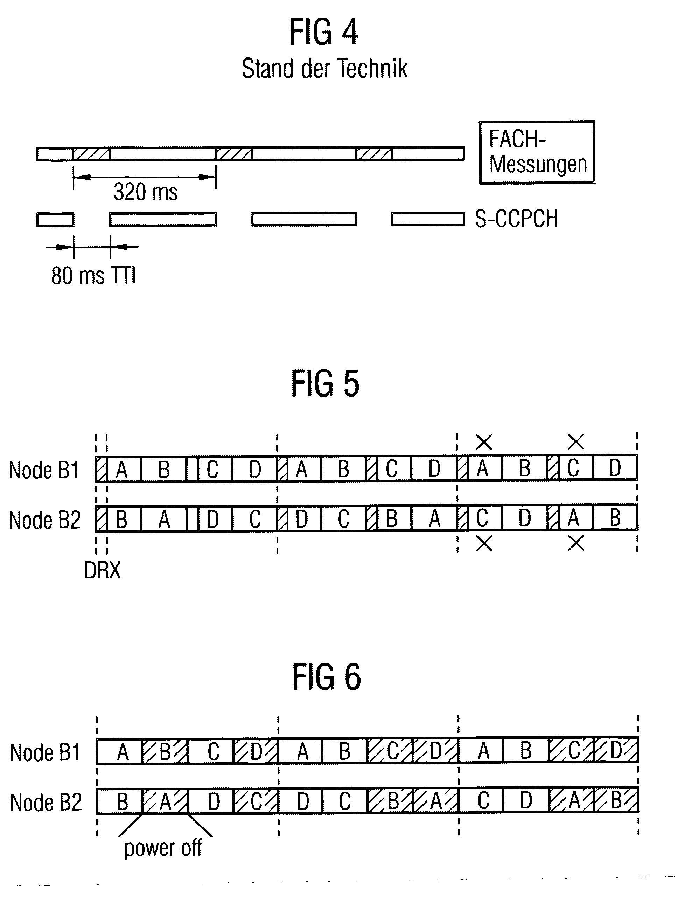

Ein ähnliches Problem entsteht, wenn sich eine Teilnehmerstation in einem vorwärts gerichteten Zugriffskanal-Zustand einer Zelle (Cell FACH (Forward Access Channel) state) befindet, in dem der Teilnehmerstation ein allgemein vorgegebener oder ein geteilt verwendeter Transportkanal in der Aufwärtsrichtung zugewiesen ist, beispielsweise der Direktzugriffskanal RACH (Random Access Channel), den die Teilnehmerstation zu beliebiger Zeit für die Zugriffsprozedur verwenden kann. Ein Charakteristikum des Zugriffs auf den FACH der Zelle besteht darin, dass die Position der Teilnehmerstation dem terrestrischen Funkzugriffsnetz von UMTS (UTRAN: UMTS Terrestrial Radio Access Network) auf Zellebene hinsichtlich der Zelle bekannt ist, in der die Teilnehmerstation zuletzt eine Zellaktualisierungsprozedur durchgeführt hat. In diesem Zustand ist der Teilnehmerstation kein fest zugewiesener Kanal zugewiesen und Messungen gemäß der komprimierten Betriebsart sind nicht erforderlich. Jedoch muss die Teilnehmerstation den FACH in Abwärtsrichtung kontinuierlich überwachen und Zwischenfrequenz- und Zwischen-RAT-Messungen sind periodisch durchzuführen. Die Dauer des Messverlaufs entspricht der Dauer des größten Übertragungszeitintervalls (TTI: Transmission Time Interval) auf dem für die Rundfunkmitteilungen bzw. MBMS verwendeten Kanal S-CCPCH, welche durch die Teilnehmerstation beobachtet werden kann, wobei die Messungsabläufe periodisch alle $2^k$ Übertragungszeitintervalle mit k = 1,2,3 für 80ms TTI gemäß derzeitiger Vorgaben stattfinden. Im Fall einer TTI-Dauer der Messung von 80ms als längster Dauer gibt es je nach Wahl von k Messperioden von 160ms, 320ms bzw. 640ms. Zur Verdeutlichung stellt Fig. 4 ein Beispiel einer Teilnehmerstation in dem sogenannten cell FACH state mit k = 2 dar. Alle 320ms kann die Teilnehmerstation den MBMS-Empfang auf dem entsprechenden Kanal S-CCPCH unterbrechen für den Fall, dass Zwischenfrequenz- und RAT-Messungen erforderlich sind.

Nachteilhaft bei allen Verfahren ist, dass eine Teilnehmerstation kontinuierlich und fortlaufend gesendete Daten auf einem Kanal S-CCPCH während der Durchführung von Messungen nur unvollständig empfangen kann. Derzeit erörtert werden verschiedene Ansätze zur Problemlösung. Ein Ansatz besteht darin, dass ein Sender mit Kenntnis der Lücken seitens der empfangenden Teilnehmerstation einfach die Übertragung von MBMS-Daten während dieser Zeiten unterbricht und eine diskontinuierliche Übertragung (DTX: Discontinuous Transmission) durchführt.

Ein anderer Ansatz besteht darin, dass empfängerseitig die Teilnehmerstation versucht, fehlende Daten zu rekonstruieren, beispielsweise durch eine Dekodierung unter Verwendung einer Vorwärts-Fehlerkorrektur (FEC: Forward Error Correction), z.B. mittels für sich bekannter Turbo-Dekodierungs- und Verschachtelungs- (Interleaving) Verfahren. Diese Ansätze sind jedoch problematisch, da die Messlücken verschiedener empfängerseitiger Teilnehmerstationen, die sich innerhalb einer Zelle befinden und MBMS-Daten empfangen, zeitlich zueinander nicht ausgerichtet sind. Die entsprechenden Strukturen der Lücken sind messspezifisch, d.h. abhängig von der Art der Messung, welche durch eine Teilnehmerstation durchzuführen ist, also beispielsweise Zwischenfrequenz- oder Zwischen-RAT-Messungen, wobei dies beispielsweise auch von der Position der Teilnehmerstation innerhalb der Zelle abhängt.

Der momentan bevorzugte Ansatz besteht darin, dass Zwischenfrequenz- oder Zwischen-RAT-Messungen durch die Teilnehmerstation während eines MBMS-Empfangs unter Einsatz eines diskontinuierlichen Empfangs (DRX: Discontinuous Reception) durchgeführt wird. In diesem Fall werden die MBMS-Daten ohne eine Unterbrechung gesendet und übertragen, wobei eine einzelne empfangende Teilnehmerstation die MBMS-Daten, welche während der Durchführung von Interfrequenz- und Inter-RAT-Messungen nicht empfangen oder verarbeitet wurden, einfach verliert. Durch die Verwendung einer Vorwärts-Fehlerkorrektur müsste die Teilnehmerstation versuchen, die fehlenden Daten zu rekonstruieren.

Aus DE 199 49 610 A1 ist ein Verfahren zum Übertragen von in einer Rahmenstruktur eingebetteten Informationen in einem Mobilfunksystem bekannt, bei dem die Information eines komprimierten Rahmens während eines Handover-Vorgangs, an dem eine Basisstation und eine Mobilstation beteiligt sind, übertragen werden, wobei die Informationen des komprimierten Rahmens auf mehrere an dem Handover-Vorgang beteiligte Basisstationen aufgeteilt und von diesen unabhängig voneinander übertragen werden.

In der nachveröffentlichten WO 2005/109675 A1 ist ein Verfahren zum Empfangen von in einer Folge gesendeten Daten in einem Mobilfunksystem mit Empfanglücken beschrieben, bei dem bei der Übertragung der von einem ersten Sender gesendeten Daten zu einem Empfänger Empfangslücken entstehen und die während der Empfangslücken nicht empfangenen Daten durch den Empfänger rekonstruiert werden. Die Rekonstruierung der nicht vom ersten Sender empfangenen Daten wird dadurch erreicht, dass die nicht empfangenen Daten zeitversetzt oder verwürfelt von einem zweiten Sender zwischen den Empfangslücken vom Empfänger empfangen und zur Rekonstruktion verwendet werden. Die Reihenfolge der vom zweiten Sender ausgesandten Daten kann hierbei gegenüber der vom ersten Sender ausgesandten Daten vertauscht sein, wobei unterschiedliche Sequenzreihenfolgen möglich sind.

Die Aufgabe der Erfindung besteht darin, eine technische Lehre anzugeben, die eine effiziente Übertragung von Daten ermöglicht.

Diese Aufgabe wird durch die Merkmale der unabhängigen Ansprüche gelöst. Vorteilhafte Weiterbildungen der Erfindung sind in den abhängigen Ansprüchen definiert.

Erfindungsgemäß werden also zum Übertragen von Daten Datenblöcke von Basisstationen an zumindest eine Teilnehmerstation gesendet, und Datenblöcke, die von einer Basisstation gesendet werden, auch von weiteren Basisstationen an die zumindest eine Teilnehmerstation gesendet. Dabei werden Datenblöcke von einer ersten Basisstation in einer vordefinierten ersten Abfolge (Abfolge 1) gesendet, und Datenblöcke von einer zweiten Basisstation in einer vordefinierten zweiten Abfolge (Abfolge 2) gesendet, und Datenblöcke von einer dritten Basisstation in einer vordefinierten dritten Abfolge (Abfolge 3) gesendet, und Datenblöcke von einer vierten Basisstation in einer vordefinierten vierten Abfolge (Abfolge 4) gesendet, wobei die vier Abfolgen durch einen der folgenden Sätze beschrieben werden oder beschreibbar sind:

(1)

| Abfolge 1: | A B C D | A B C D | A B C D |
|---|---|---|---|
| Abfolge 2: | B A D C | D C B A | C D A B |
| Abfolge 3: | C D A B | B A D C | D C B A |
| Abfolge 4: | D C B A | C D A B | B A D C |

oder

(2)

| Abfolge 1: | A B C D | A B C D | A B C D |
|---|---|---|---|
| Abfolge 2: | B A D C | C D B A | C D B A |
| Abfolge 3: | C D B A | B A D C | D C A B |
| Abfolge 4: | D C A B | D C A B | B A D C |

oder

(3)

| Abfolge 1: | A B C D | A B C D | A B C D |
|---|---|---|---|
| Abfolge 2: | B A D C | C D B A | D C A B |
| Abfolge 3: | C D B A | B A D C | C D B A |
| Abfolge 4: | D C A B | D C A B | B A D C |

oder

(4)

| Abfolge 1: | A B C D | A B C D | A B C D |
|---|---|---|---|
| Abfolge 2: | B A D C | C D B A | D C A B |
| Abfolge 3: | C D B A | D C A B | B A D C |
| Abfolge 4: | D C A B | B A D C | C D B A |

oder

4

(5)

| Abfolge 1: | A B C D | A B C D | A B C D |
|---|---|---|---|
| Abfolge 2: | B A D C | D C A B | D C A B |
| Abfolge 3: | C D B A | B A D C | C D B A |
| Abfolge 4: | D C A B | C D B A | B A D C |

oder

(6)

| Abfolge 1: | A B C D | A B C D | A B C D |
|---|---|---|---|
| Abfolge 2: | B A D C | B A D C | C D A B |
| Abfolge 3: | C D A B | D C B A | B A D C |
| Abfolge 4: | D C B A | C D A B | D C B A |

oder

(7)

| Abfolge 1: | A B C D | A B C D | A B C D |
|---|---|---|---|
| Abfolge 2: | B A D C | B A D C | C D A B |
| Abfolge 3: | C D A B | D C B A | D C B A |
| Abfolge 4: | D C B A | C D A B | B A D C |

oder

(8)

| Abfolge 1: | A B C D | A B C D | A B C D |
|---|---|---|---|
| Abfolge 2: | B A D C | C D A B | D C B A |
| Abfolge 3: | C D A B | B A D C | B A D C |
| Abfolge 4: | D C B A | D C B A | C D A B |

oder

(9)

| Abfolge 1: | A B C D | A B C D | A B C D |
|---|---|---|---|
| Abfolge 2: | B A D C | C D B A | C D B A |
| Abfolge 3: | C D A B | B A D C | B A D C |
| Abfolge 4: | D C B A | D C A B | D C A B |

oder

(10)

| Abfolge 1: | A B C D | A B C D | A B C D |
|---|---|---|---|
| Abfolge 2: | B A D C | C D B A | D C A B |
| Abfolge 3: | C D A B | B A D C | B A D C |
| Abfolge 4: | D C B A | D C A B | C D B A |

oder

(11)

| Abfolge 1: | A B C D | A B C D | A B C D |
|---|---|---|---|
| Abfolge 2: | B A D C | D C A B | C D B A |
| Abfolge 3: | C D A B | B A D C | B A D C |

(fortgesetzt)

(11)
Abfolge 4:   D C B A    C D B A    D C A B

oder

(12) Abfolge 1:   A B C D    A B C D    A B C D
Abfolge 2:       B A D C    D C A B    D C A B
Abfolge 3:       C D A B    B A D C    B A D C
Abfolge 4:       D C B A    C D B A    C D B A

oder

(13)
Abfolge 1:   A B C D    A B C D    A B C D
Abfolge 2:   A D C B    D C B A    C B D A
Abfolge 3:   B D A C    B D A C    D C A B
Abfolge 4:   C D B A    C A D B    D B A C

oder

(14)
Abfolge 1:   A B C D    A B C D    A B C D
Abfolge 2:   A D C B    D C B A    C B D A
Abfolge 3:   B D A C    C A D B    D C A B
Abfolge 4:   C D B A    B D A C    D B A C

oder

(15)
Abfolge 1:   A B C D    A B C D    A B C D
Abfolge 2:   A D C B    D C B A    D A C B
Abfolge 3:   B D A C    B D A C    C D B A
Abfolge 4:   C D B A    C A D B    B D C A

oder

(16)
Abfolge 1:   A B C D    A B C D    A B C D
Abfolge 2:   A D C B    D C B A    D A C B
Abfolge 3:   B D A C    C A D B    C D B A
Abfolge 4:   C D B A    B D A C    B D C A

oder

(17)
Abfolge 1:   A B C D    A B C D    A B C D
Abfolge 2:   C B A D    D C B A    D A C B
Abfolge 3:   B D A C    B D A C    C D B A
Abfolge 4:   D C A B    C A D B    B D C A

oder

(18)
Abfolge 1:   A B C D   A B C D   A B C D
Abfolge 2:   C B A D   D C B A   D A C B
Abfolge 3:   B D A C   C A D B   C D B A
Abfolge 4:   D C A B   B D A C   B D C A

oder

(19)
Abfolge 1:   A B C D   A B C D   A B C D
Abfolge 2:   C B A D   D C B A   C B D A
Abfolge 3:   B D A C   B D A C   D C A B
Abfolge 4:   D C A B   C A D B   D B A C

oder

(20)
Abfolge 1:   A B C D   A B C D   A B C D
Abfolge 2:   C B A D   D C B A   C B D A
Abfolge 3:   B D A C   C A D B   D C A B
Abfolge 4:   D C A B   B D A C   D B A C

Dabei beschreiben A,B,C,D verschiedene Datenblöcke, die insbesondere Daten eines MBMS Verkehrskanals (TrCh) tragen.

Insbesondere sind die innerhalb einer Abfolge gesendeten Datenblöcke, die mit dem gleichen Buchstaben, A, B,C oder D bezeichnet werden, verschieden. Im Rahmen der Erfindung liegen daher insbesondere auch folgende Modifizierungen zu den oben aufgeführten Sätzen von Abfolgen:

Ersetze in jeder Abfolge

-   das erste A durch A1, das zweite A durch A2, das dritte A durch A3,
-   das erste B durch B1, das zweite B durch B2, das dritte B durch B3,
-   das erste C durch C1, das zweite C durch C2, das dritte C durch C3,
-   das erste D durch D1, das zweite D durch D2, das dritte D durch D3.

Für den ersten Satz von Abfolgen ergäbe sich dann folgender modifizierter Satz von Abfolgen, der - ebenso wie die entsprechenden Modifizierungen der übrigen oben aufgeführten Sätze von Abfolgen - im Rahmen der Erfindung liegt.

Abfolge 1:   A1 B1 C1 D1   A2 B2 C2 D3   A3 B3 C3 D3
Abfolge 2:   B1 A1 D1 C1   D2 C2 B2 A2   C3 D3 A3 B3
Abfolge 3:   C1 D1 A1 B1   B2 A2 D2 C2   D3 C3 B3 A3
Abfolge 4:   D1 C1 B1 A1   C2 D2 A2 B2   B3 A3 D3 C3.

Dabei bezeichnen vorzugsweise jeweils gleiche Buchstabe-Ziffern-Kombinationen in den verschiedenen Abfolgen gleiche Datenblöcke.

Obwohl immer vier Abfolgen (für jede Basisstation eine) aufgeführt sind, liegt es auch im Rahmen der Erfindung, wenn nur eine der Abfolgen eines Satzes der oben genannten Sätze von Abfolgen von einer Basisstation zur Aussendung von Datenblöcken verwendet wird.

Obwohl immer vier Abfolgen (für jede Basisstation eine) aufgeführt sind, liegt es auch im Rahmen der Erfindung, wenn nur zwei der Abfolgen eines Satzes der oben genannten Sätze von Abfolgen von zwei Basisstationen zur Aussendung von Datenblöcken verwendet werden.

Obwohl immer vier Abfolgen (für jede Basisstation eine) aufgeführt sind, liegt es auch im Rahmen der Erfindung, wenn nur drei der Abfolgen eines Satzes der oben genannten Sätze von Abfolgen von drei Basisstationen zur Aussendung von Datenblöcken verwendet werden.

Der Grund für die Aufnahme von vier Folgen in jeden Satz liegt darin, dass es somit auf Grund des Vier-Farben Satzes möglich ist, dass in einem Mobilfunknetz benachbarte Basisstationen jeweils unterschiedliche Folgen aussenden können und somit eine Teilnehmerstation aufgrund der hexagonalen Zellstruktur von Mobilfunknetzen im Soft-Handover die Daten von Basisstationen, die unterschiedliche Abfolgen verwenden, empfangen kann.

Die Erfindung basiert auch auf folgenden Gedanken: Wenn eine Teilnehmerstation - aufgrund der in der Einleitung genannten Gründe - von einer Basisstation gesendete Datenblöcke nur teilweise empfangen oder rekonstruieren kann, die Teilnehmerstation aber die unvollständig empfangenen oder rekonstruierten Datenblöcke auch von anderen Basisstationen oder einer anderen Basisstation empfangen kann, dann ist es sinnvoll, die Datenblöcke von verschiedenen Basisstationen zeitversetzt zu senden, und diese dann in der Teilnehmerstation zur Rekonstruktion, insbesondere durch ein "selective combining"-Verfahren, der unvollständig empfangenen oder rekonstruierten Datenblöcke (DRXed Datenblöcke) zu verwenden. Dazu werden die Datenblöcke von den verschiedenen Basisstationen in verschiedener Reihenfolge ausgesendet, um der Teilnehmerstation zu ermöglichen, ein innerhalb einer Messlücke von einer Basisstation eingehendes Datenpaket später von einer anderen Basisstation empfangen zu können. Insgesamt soll durch die Wahl geeigneter verschiedener Abfolgen für verschiedene Basisstationen die Wahrscheinlichkeit für das Verlieren eines Datenblockes aufgrund von Messlücken, insbesondere im FACH-Zustand, reduziert werden.

Ein weiterer Gesichtspunkt bei der Auswahl geeigneter Sätze von Abfolgen liegt vorzugsweise darin, dass die UE oder Empfängerelemente der UE oder Verarbeitungseinheiten der UE über möglichst viele und/oder lange Zeiträume ausgeschaltet oder passiv geschaltet werden können. Dies ist beispielsweise immer dann möglich, wenn von einer Basisstation gesendete Datenblöcke schon vollständig empfangen wurden, und dann von einer weiteren Basisstation noch einmal gesendet werden. Die für diesen weiteren Empfang oder diese weitere Verarbeitung vorgesehenen Komponenten können passiv bleiben, da ein weiterer Empfang nicht erforderlich ist.

Oben genannte Sätze von Abfolgen sind eine sehr kleine Auswahl aus den theoretisch möglichen M Sätzen, wobei gilt:

$$M = \binom{N-1}{3} = \binom{13823}{3} \approx 4.40 \cdot 10^{11}, \text{ mit } N = P^3 = (4 \cdot 3 \cdot 2 \cdot 1)^3 = 13824$$

P=(4*3*2*1) ist die Anzahl der möglichen aus jeweils vier Datenblöcken bestehenden Einheiten mit unterschiedlichem Dateninhalt je Datenblock. Diese Einheiten werden auch als Tupel bezeichnet. Eine Abfolge besteht aus je 3 solcher Tupel. Damit gibt es $P^3$ mögliche Abfolgen und M unterschiedliche Sätze mit jeweils 4 Abfolgen.

Obige Auswahl ist das Ergebnis von aufwändigen Simulationen mit eigens für diesen Zweck erstellten Simulationswerkzeugen.

Die Simulationen beruhten dabei vorzugsweise auch ganz oder teilweise auf folgenden Annahmen und Erkenntnissen, welche zu in der Praxis besonders bevorzugten Sätzen von Abfolgen führen:

- Die Messzeit oder die Zeit, in der eine Teilnehmerstation nicht die Daten einer Basisstation empfangen kann, beträgt ein Achtel oder ein Sechzehntel der gesamten Empfangszeit;
- Das Übertragungszeitintervall TTI für einen Datenblock zur Realsisierung eines MBMS ist 40 oder 80 ms lang;
- Messlücken oder die Zeit, die von einem Datenblock gegebenenfalls in der Teilnehmerstation nicht empfangen wird, ist 10 ms oder 20 ms lang;
- Der FACH Zustand (UE muss spezielle Kontrollkanäle empfangen) ist nur ein Übergangszustand und die Teilnehmerstation UE ist viel länger im Idle Zustand (Ruhezustand)oder im PCH Zustand (UE muß den Paging Indicator Channel empfangen) als im FACH Zustand;
- Teile jedes zweiten Übertragungszeitintervalls TTI können aufgrund der Messlücken verloren gehen;
- es werden Sätze von Abfolgen von 12 Datenblöcken oder TTIs gesucht, die - aufgrund von Speicheranforderungen der UE - aus Tupeln mit jeweils 4 Datenblöcken (A,B,C,D) oder TTIs bestehen. Auf Grund des Vier-Farben Satzes wird zur Netzwerkplanung vorzugsweise ein Satz von vier jeweils vier zueinander unterschiedlichen Abfolgen benötigt.

Als besonders vorteilhaft stellten sich dabei Sätze von Abfolgen heraus, welche eine, mehrere oder insbesondere alle der folgenden Eigenschaften aufweisen:

1. wenn die Basisstationen synchronisiert sind, werden in beliebigen Paaren von Abfolgen eines Satzes höchstens 2 Datenblöcke (TTIs) von den 12 Datenblöcken (TTIs) einer Abfolge nicht oder nicht vollständig empfangen, obwohl in jeder Abfolge 6 Datenblöcke (TTIs) nicht oder nicht vollständig empfangen werden;

2. Wenn alle TTIs aus beiden Abfolgen von beliebigen Paaren von Abfolgen eines Satzes aufs erste Mal empfangen werden können, kann der Empfänger (der UE) für 6 TTIs passiv geschaltet werden, weil alle 12 TTIs schon in einer der beiden Abfolgen innerhalb von 6 TTIs empfangen werden konnten.

3. Diese Eigenschaften sind unabhängig davon, welche Abfolgen eines Satzes von Abfolgen zu Paaren zusammengefasst werden.

4. Die Verzögerung, mit der ein bestimmtes TTI in einer zweiten Abfolge gegenüber einer ersten Abfolge eines Paares gesendet wird, ist maximal 4 TTIs. (Dies ergibt sich automatisch aus der Verwendung von Tupeln der Länge 4 und dient dazu, Speicherbeschränkungen in der UE zu erfüllen)

Figur 5 zeigt zwei Abfolgen (Node B1, Node B2). Im ersten Tupel wird jedes TTI in einer der beiden Abfolgen ganz empfangen und in der anderen Abfolge nicht oder nicht vollständig empfangen (dunkel dargestellt) (DRXed). Im dritten Tupel werden die TTIs A und C aus keiner der beiden Abfolgen vollständig empfangen (gekennzeichnet durch X)

Figur 6 zeigt ebenfalls zwei Abfolgen (Node B1, Node B2). Die dunkel markierten TTIs müssen dabei nicht empfangen werden, da sie schon zuvor vollständig empfangen wurde. Das UE kann seinen Empfänger daher bezüglich dieses TTIs passiv schalten.

Unabhängig von den erfindungsgemäßen Sätzen von Abfolgen stellte sich bei den Simulationen heraus, dass die Verwendung eines der beiden folgenden Sätze von Tupeln zur Bildung von Sätzen von Abfolgen besonders bevorzugt verwendet werden kann um beispielsweise den Empfänger maximal häufig passiv schalten zu können.

| Tupe1 | I | II |
|---|---|---|
| 1 | ABCD | ABCD |
| 2 | BADC | BADC |
| 3 | CDAB | CDBA |
| 4 | DCBA | DCAB |

Die oben zuerst angegebenen Sätze (1) bis (12) von Abfolgen weisen - bei der Annahme von einer Synchronisation der Basisstationen von besser als + oder - ein Rahmen und bei der Annahme einer Messung von 10 ms alle 80 ms - alle die Eigenschaften 1 bis 4 auf und sind daher besonders vorteilhaft.

Der folgende Satz von Abfolgen

| Sequence | TTI no. 1 to 4 | TTI no. 5 to 8 | TTI no. 9 to 12 |
|---|---|---|---|
| Node B1 | ABCD | ABCD | ABCD |
| Node B2 | BADC | DCBA | CDAB |
| Node B3 | CDAB | BADC | DCBA |
| Node B4 | DCBA | CDAB | BADC |

weist zusätzlich die folgenden Eigenschaften auf:

5. Der Empfänger der UE kann zumindest teilweise für zwei aufeinander folgende TTIs innerhalb einer Abfolge von 12 TTIs passiv geschaltet werden.

6. Wenn die UE die erforderlichen Messungen innerhalb von 5 der 6 möglichen Messlücken durchführen kann, können alle TTIs zumindest einer Abfolge ohne Messlücke empfangen werden. Figur 5 zeigt, dass die letzen TTIs A und C der Abfolgen jeweils ganz empfangen werden könnten, wenn die 5. oder 6. Messung nicht durchgeführt werden müsste.

Aus diesem Grund ist dieser Satz von Abfolgen oder ein darauf basierender Satz von Abfolgen, der beispielsweise wie oben beschrieben modifiziert wird - besonders bevorzugt zu verwenden.

Die Simulationen zeigten, dass die Verwendung oben genannter Sätze von Abfolgen auch dann noch gute Ergebnisse bringt, wenn die Abfolgen um bis zu einem Rahmen gegeneinander verschoben sind.

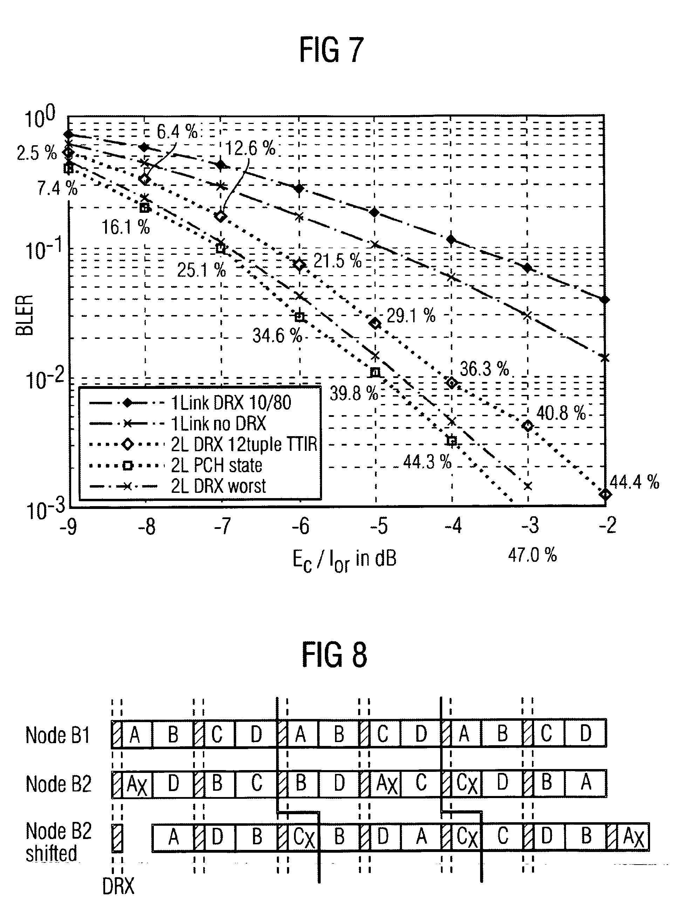

Figur 7 zeigt Simulationsergebnisse. Link Level Ergebnisse für selektives und weiches (Soft) Kombinieren (Combining) bei der Verwendung von 40 ms langen TTIs und einer Gesamtmesszeit von 1/8 der gesamten Empfangszeit sind in Figur 7 dargestellt.

Die Kurve 2LDRX worst zeigt das Ergebnis bei der Anwendung eines Soft Combining-Verfahrens im synchronisierten Fall, welcher der schlechteste Fall ist. Die Kurven 2L PCH state und 2L DRX 12 tuple TTIR repräsentieren die Ergebnisse für ein selektives Combining mit verschiedenen TTI-Abfolgen. Die Kurve 2L DRX 12 tuple TTIR setzt voraus, dass alle 80 ms eine 10 ms lange Messlücke vorliegt (FACH-Zustand). Die Kurve 2L PCH state zeigt flexible Messungen (PCH state, idle mode). Die Zahlen zeigen die Prozentsätze, die für Messungen oder für das Ausschalten der UE bzw. das Passiv-Schalten von Empfangselementen der UE verwendet werden.

Diese Ergebnisse wurden erzielt unter der Annahme, dass die Node Bs vollständig synchronisiert sind. Mit einer Verschiebung von höchstens einem Rahmen (Frame) ist die Stromersparnis um einen Faktor von 5/6 reduziert, und die Performance im CELL_FACH ist um 0,2 dB verschlechtert.

Im Folgenden wird davon ausgegangen, dass zwischen verschiedenen Basis-Stationen (Node Bs) ein Zeitversatz von bis zu einem TTI liegt. Aufwändige Simulationen zeigen dabei, dass Sätze von Abfolgen besonders bevorzugt verwendet werden können, welche die folgenden 4 Eigenschaften haben:

1. Unabhängig von der Zeitverschiebung von bis zu + oder - einem TTI werden immer genau 3 der 6 möglichen nicht empfangenen oder nicht vollständig empfangenen Datenblöcke aus beiden Abfolgen nicht empfangen oder nicht vollständig empfangen.

2. Bei guten Kanalbedingungen kann die UE oder zumindest Elemente der Empfangs- oder Verarbeitungseinrichtung der UE für mindestens 3 der 12 TTIs abgeschaltet oder passiv geschaltet werden.

3. Die beiden oben genannten Eigenschaften sind unabhängig von dem gewählten Paar von Abfolgen aus dem Satz von 4 Abfolgen;

4. die Zahl der TTIs, in denen die UE oder Empfangselemente der UE möglicherweise ausgeschaltet werden können, nimmt bis 4 zu, wenn die Node Bs synchron sind.

Es zeigte sich, dass genau 8 Sätze von Abfolgen existieren, welche diese Eigenschaften haben. Diese Sätze von Abfolgen sind oben aufgeführt und mit den Nummern (13) bis (20) markiert. Diese Sätze von Abfolgen sind daher - insbesondere bei einem Zeitversatz von bis zu einem TTI zwischen den verschiedenen Basisstationen - besonders bevorzugt zu verwenden.

Figur 8 zeigt ein Beispiel von 2 Abfolgen und den Verlust von Datenpaketen aufgrund von Messlücken, die einen Empfang bzw. einen vollständigen Empfang von Datenblöcken nicht erlauben. Mit einem X markierte Datenblöcke in einer der zweiten Abfolge (Node B2, synchron und zeitversetzt) sind Datenblöcke, die sowohl aus der ersten Abfolge (Node B1) als auch in der zweiten Abfolge (Node B2) nicht oder nicht vollständig empfangen werden.

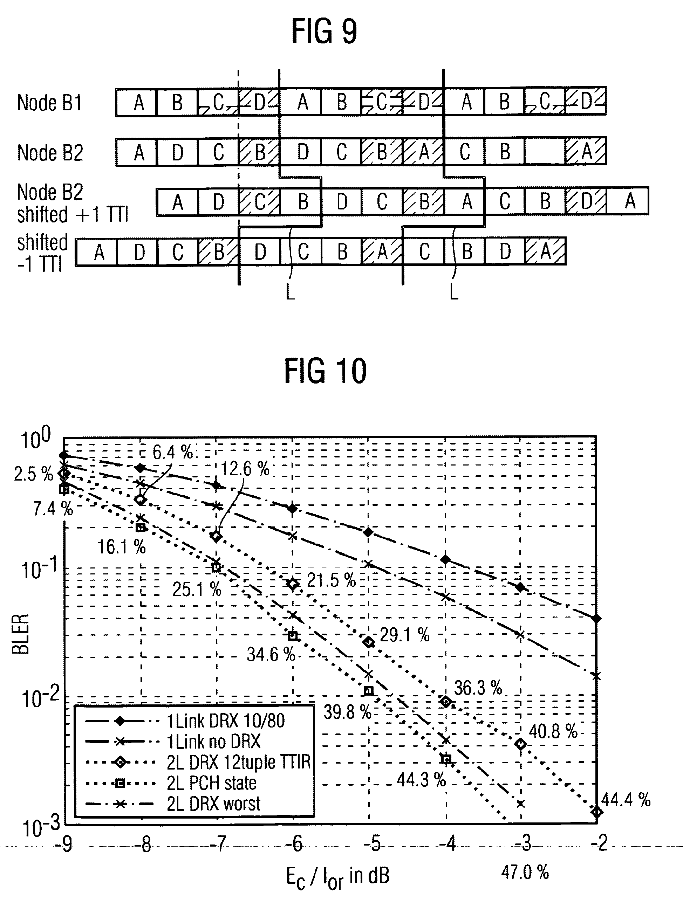

Figur 9 zeigt Zeitintervalle, in denen die UE oder Empfangselemente oder Verarbeitungselemente der UE passiv geschaltet werden können, wenn alle TTIs von 2 Abfolgen bzw. Node Bs korrekt empfangen wurden. Die Linien L zeigen die Grenzen zwischen Tupeln. Die teilweise dunkel ausgefüllten Datenblöcke in der Abfolge 1 (Node B1) zeigen Datenblöcke, in denen die UE oder Empfangselemente oder Verarbeitungselemente der UE passiv geschaltet werden können in Abhängigkeit vom Zeitversatz der Abfolge 2 (Node B2).

In Figur 10 sind Simulationsergebnisse dargestellt, die auf der Verwendung von oben genannten Sätzen von Abfolgen basieren, welche einen Zeitversatz von höchstens einem TTI erlauben. Bei synchronen Node Bs kann der Empfänger für 4 TTIs von 12 TTIs passiv geschaltet werden .Bei einem Zeitversatz von einem TTI kann der Empfänger für 3 von 12 TTIs passiv geschaltet werden.

Die Figur 10 entspricht im Wesentlichen der Figur 7, außer dass nun Sätze von Abfolgen verwendet werden, die einen Zeitversatz von bis zu einem TTI erlauben und dennoch eine gute Performance und hohe Stromersparnisse ermöglichen.

Bevorzugt wird insbesondere ein Verfahren zum Empfangen von in einer Folge (Abfolge) von einem ersten Sender (Basisstation) eines Mobilfunksystems auf einem ersten Ressourcenelement einer Ressource gesendeten Daten (Datenblöcke) durch einen Empfänger (Teilnehmerstation, Mobilstation, UE), wobei beim Empfangen Empfangslücken entstehen und während der Empfangslücken nicht empfangene Daten durch den Empfänger rekonstruiert werden, wobei die von dem ersten Sender nicht empfangenen Daten zeitlich versetzt oder verwürfelt von einem zweiten Sender auf dem gleichen Ressourcenelement der Ressource zwischen den Empfangslücken empfangen und zum Rekonstruieren der Folge aus Daten verwendet werden.

Bevorzugt wird alternativ oder in Kombination insbesondere ein Verfahren zum Senden einer Folge von Daten von einem Sender zu zumindest einem Empfänger in einem Mobilfunksystem über ein Ressourcenelement einer Ressource, wobei das Mobilfunksystem einen zweiten Sender mit überlappendem Sendebereich zum Sendebereich des ersten Senders aufweist, wobei die Daten auf dem selben Ressourcenelement von dem zweiten Sender mit einem Versatz zeitlich versetzt oder verwürfelt zu deren Aussenden über den ersten Sender derart durchgeführt wird, dass empfängerseitig durch Empfangslücken auf dem Ressourcenelement beim Empfang der Daten von dem ersten Sender nicht empfangene Daten rekonstruierbar sind.

Bevorzugt wird insbesondere ein Empfänger für ein Mobilfunksystem mit einer Empfängereinrichtung zum Empfangen einer Folge von Daten eines Senders auf einem Ressourcenelement einer Ressource, wobei die Empfängereinrichtung zeitweilig den Empfang auf dem Ressourcenelement zum zeitweiligen Wechsel des Ressourcenelements unterbricht, wodurch Empfangslücken entstehen, wobei während einer Empfangslücken nicht empfangene Daten zeitlich versetzt von einem zweiten Sender empfangen und zum Rekonstruieren der Folge von Daten verarbeitet werden.

Bevorzugt werden insbesondere Mobilfunksystemeinrichtungen eines Mobilfunksystems mit zumindest zwei Sendern mit zumindest teilweise überlappenden Sendebereichen, wobei die Sender eine Folge von Daten aussenden, wobei die Sender ausgestaltet sind, zum Aussenden der Daten jeweils das gleiche Ressourcenelement einer Ressource zu verwenden, wobei der eine Sender ausgestaltet ist, einzelne Datenelemente oder Datenblöcke der Daten jeweils versetzt zu einem entsprechenden Datenelement oder Datenblock auf bzw. im Vergleich zu dem anderen Sender auszusenden.

Bevorzugt wird insbesondere ein Verfahren, bei dem als das Ressourcenelement eine Sende- und Empfangsfrequenz verwendet wird, insbesondere eine Frequenz eines FDD- oder FDMA-Mobilfunksystems.

Bevorzugt wird insbesondere ein Verfahren, bei dem empfängerseitig die Empfangslücken durch einen zeitweiligen Wechsel des Ressourcenelements zu einem anderen Ressourcenelement der Ressource entstehen.

Übertragbar ist ein solcher Ansatz auch auf andere Datenausfälle, beispielsweise wenn einzelne Daten einer Folge von Daten durch Störungen nicht empfangen werden können, wie beispielsweise im Fall einer zweiten Empfängereinrichtung und aktiven Messungen in einem nahen Frequenzband mit zu hoher Störwirkung. Auch im Fall externer Störungen durch eine externe Störquelle ist das Verfahren umsetzbar.

Bevorzugt wird insbesondere ein Verfahren, bei dem das Mobilfunksystem ein Kommunikationssystem mit dem Ressourcenelement zum Senden der Folge von Daten über eine Zeitdauer ist und der zumindest eine Empfänger den Empfang während der Zeitdauer zeitweilig für einen Empfang auf einem anderen Ressourcenelement unterbricht und die Empfangslücken dadurch verursacht.

Bevorzugt wird insbesondere ein Verfahren, bei dem die Reihenfolge der Daten insbesondere Datenblöcke beim Aussenden durch den zweiten Sender gegenüber der Reihenfolge der Daten beim Aussenden über den ersten Sender jeweils innerhalb von Datenblöcken mit einer begrenzten Anzahl von Elementen vertauscht wird. Ein solches Vertauschen, d. h. eine Permutation kann in Teilbereichen zyklisch oder zufällig durchgeführt werden.

Falls die Sender synchronisiert sind, z.B. innerhalb der Sektoren einer Zelle, so verhindert eine einfache zyklische Vertauschung von möglichst kleinen Teildatenbereichen, dass zu keiner Zeit von mehreren Sendern die gleichen Daten übertragen werden und außerdem ist der für die Umsortierung der Daten in der Empfangseinrichtung benötigte Speicher gering. Au-βerdem sofern Datenblöcke mit Paketnummern zur Identifizierung der Reihenfolge vorhanden sind, kann eine einfach Umordnung vorgenommen werden. Werden lediglich zeitliche Verschiebungen mit gleichbleibender Reihenfolge der einzelnen Datenelemente vorgenommen, so kann zum Vergleichen unter Herausfinden eines entsprechenden Datenelements auch eine Kreuzkorrelation zwischen der mit fehlendem Datenelement empfangenen Datenfolge und der Datenfolge von dem anderen Sender durchgeführt werden.

Vorzugsweise wird die von Nachbarstationen verwendete Verschiebung bzw. Verwürfelung der Mobilstation mitgeteilt. Diese kann entweder durch eine explizite Signalisierung erfolgen, oder wird implizit durch eine andere Kenngröße, z.B. die Zellenidentifikation ID übermittelt werden. Beispielsweise kann die verwendete Verschiebung berechnet werden aus der Zell ID modulo einem Maximalverschiebungswert, bzw. die Nummer der zür Verwürfelung angewandten Permutation kann berechnet werden aus der Zell ID modulo der Anzahl der verwendeten Permutationen.

Falls die Sender allerdings nicht synchronisiert sind, werden bevorzugt keine rein zyklischen Vertauschungen vorgenommen, da so nicht verhindert werden kann, dass bei einer beliebig zufälligen Zeitverschiebung zwischen zwei Sendern nicht der Fall auftritt, dass von beiden Sendern die gleichen Daten zur gleichen Zeit übertragen werden. Hier ist eine insbesondere zufällige Permutation möglichst kleiner Datenteilbereiche vornehmbar, so dass wiederum der für die Umsortierung in der Empfangseinrichtung benötigte Speicher gering ist.

Bevorzugt wird insbesondere ein solches Verfahren, bei dem ein Versatz eines Datenelements oder Datenblocks der Daten beim Aussenden über den zweiten Sender gegenüber dem Aussenden dieses Datenelements oder Datenblocks über den ersten Sender zumindest der doppelten Dauer der Empfangslücke entspricht.

Bevorzugt werden insbesondere ein solches Verfahren, ein solcher Empfänger oder solche Mobilfunksystemeinrichtungen zum Durchführen eines Empfangsverfahrens im UMTS-Kompressionsmodus-Verfahren bei Empfang kontinuierlich und ohne Berücksichtigung des Kompressionsmodus gesendeter Daten.

Bevorzugt werden insbesondere ein solches Verfahren, eine solche Empfängereinrichtung oder eine solche Mobilfunksystemeinrichtung, wobei der erste und der zweite Sender (Basisstation) zwei Sektorsender einer einzigen Sendestation sind. eine Node B1 und eine Node B2 usw. können also auch zwei Sektorsender einer einzigen Sendestation sein.

Bevorzugt wird insbesondere ein solches Verfahren, eine solche Empfängereinrichtung oder eine solche Mobilfunksystemeinrichtung, wenn der Versatz eine zeitnahe Rekonstruktion ermöglicht, insbesondere eine Rahmendauer nicht überschreitet.

Ein Ausführungsbeispiel wird nachfolgend anhand der Zeichnung näher erläutert. Es zeigen:

Fig. 1     schematisch miteinander kommunizierende Stationen eines Mobilfunksystems;

Fig. 2     eine Datenstruktur einer komprimierten Betriebsart gemäß dem Stand der Technik;

Fig. 3     Empfangsstrukturen eines Empfängers im Falle einer Messung in komprimierter Betriebsart und Anwendung der komprimierten Betriebsart auf fortlaufend kontinuierlich gesendete Daten; und

Fig. 4     ein Empfangsdatenschema im Fall einer zellulären FACH-Empfangsbetriebsart;

Fig. 5     Abfolgen von Datenblöcken;

Fig. 6     Abfolgen von Datenblöcken;

Fig. 7     Simulationsergebnisse;

Fig. 8     Abfolgen von Datenblöcken;

Fig. 9     Abfolgen von Datenblöcken;

Fig. 10    Simulationsergebnisse.

Fig. 1 zeigt schematisch eine Anordnung verschiedener Einrichtungen eines Mobilfunksystems, beispielsweise gemäß UMTS, sowie darin zwischen Stationen übertragene Daten. Eine Übertragung auf andere Mobilfunksysteme und ggf. andere Betriebsarten mit vergleichbarer Problematik ist jedoch prinzipiell möglich. Insbesondere ist auch neben dem Einsatz zweier getrennter Basisstationen Node B1, Node B2 mit jeweils einer eigenen Zelle der Einsatz einer einzigen Basisstation mit einer Sektor-Antennen-Anordnung und Sektorzellen möglich.

Figur 1 zeigt eine Mobilstation UE und zwei Basisstationen Node B1, Node B2. Diese sind mit einer zentralen Steuereinrichtung (nicht dargestellt) verbunden und werden hinsichtlich der Aussendung von Daten und des Aufbaus von Kommunikationsverbindungen zentral gesteuert. In UMTS können diese zentralen Steuereinrichtungen die sog. RNC (Radio Network Controller) sein. Von beiden Basisstationen Node B1, Node B2 erhält die Mobilstation UE MBMS-Daten, welche in Datenblöcken strukturiert innerhalb von Übertragungs-Zeitintervallen TTIs von den Basisstationen Node B1, Node B2 an die UE gesendet werden.

Die Datenblöcke TTIs von den verschiedenen Basisstationen Node B1, Node B2 werden in verschiedenen Abfolgen gesendet, wobei die Abfolgen jeweils dem gleichen Satz von Abfolgen entnommen werden, und wobei der Satz von Abfolgen einer der oben aufgeführten und mit (1) bis (20) markierten Sätze von Abfolgen ist.

Nicht dargestellt sind in der Figur der Einfachheit halber weitere Basisstationen Node B3 oder Node B4, welche ebenfalls die gleichen Datenblöcke wie die beiden erstgenannten Basisstationen Node B1, Node B2 an die Mobilstation UE senden können, dabei allerdings ebenfalls verschiedene Abfolgen verwenden, die aber auch dem gleichen Satz von Abfolgen entnommen werden.

Die UE und die Basisstationen weisen geeignet eingerichtete Prozessoreinrichtungen und Empfangs- und/oder Sendeeinrichtungen auf, um Datenblöcke in einer erfindungsgemäßen Abfolge senden oder empfangen zu können.

Zur Rekonstruktion von Datenpaketen wird ein selektiv kombinierender Empfang (SC: Selective Combining) durch eine Teilnehmerstation UE bevorzugt. Dazu wird der gleiche Dateninhalt, d. h. die gleichen Daten oder Datenblöcke, in benachbarten Sektoren und/oder Zellen von mehr als einer Basisstation zu einer Teilnehmerstation gesendet. Dabei werden keine Beschränkungen hinsichtlich der Synchronisierung der Daten selber auferlegt.

In bekannter Art und Weise führt die Teilnehmerstation in beispielsweise der komprimierten Betriebsart gemäß UMTS Interfrequenz- oder Inter-RAT-Messungen durch und kann nicht alle Daten auf einem MBMS-Kanal empfangen. Jedoch werden die Daten, welche während der Messlücken bzw. Empfangslücken gesendet und nicht empfangen wurden, rekonstruiert. Neben der Möglichkeit einer für sich bekannten Vorwärts-Fehlerkorrektur (FEC) erfolgt dies dadurch, dass die Daten bzw. Datenblöcke in benachbarten und sich überlappenden Sektoren und/oder Zellen mit einem Versatz oder zu zueinander verwürfelten Zeiten gesendet werden. Dadurch kann die Teilnehmerstation während einer Empfangslücke nicht empfangene Daten über dieselbe Ressource zu einem versetzten Zeitpunkt von einer benachbarten Zelle oder von einem benachbarten Sektor empfangen und zur Rekonstruktion verwenden.

Eine Teilnehmerstation dient als Empfänger UE und befindet sich im Überlappungsbereich der Zellen des ersten bzw. des zweiten Senders Node B1, Node B2. Eine dedizierte Verbindung besteht zwischen dem Empfänger UE und dem ersten Sender Node B1. Der Empfänger UE befindet sich in einer Betriebsart, in welcher überwiegend Daten auf einer ersten Frequenz als einem ersten Ressourcenelement f1 der Ressource Frequenz des FDD-Verfahrens von dem ersten Sender B1 empfängt. Zwischenzeitlich schaltet der Empfänger UE für kurze Zeitmomente auf ein zweites Ressourcenelement f2, d. h. auf eine zweite Frequenz, um dort Messungen durchzuführen. Während dieser Zeitdauer können keine Daten b einer Abfolge von Datenblöcken empfangen werden, welche über die erste Frequenz f1 von dem ersten Sender Node B1 ausgesendet werden. Bei der Folge von Datenblöcken handelt es sich um Datenelemente, welche von dem ersten Sender Node B1 über einen Rundfunkkanal mit der ersten Frequenz als Ressourcenelement f1 an eine Vielzahl von teilnehmerseitigen Empfängern UE übertragen werden sollen. Der Empfänger UE ist somit beispielsweise eine Teilnehmerstation in der komprimierten Betriebsart des UMTS, welche MBMS-Daten von dem ersten Sender B1 empfängt.

Der Empfänger UE befindet sich außerdem innerhalb der Funkreichweite des zweiten Senders Node B2. Der zweite Sender B2 sendet dieselben Daten der Folge von Datenblöcken an Empfänger UE im Bereich seiner Zelle. Um die Empfangslücken bei dem Empfänger UE durch dessen Betrieb in der komprimierten Betriebsart ausgleichen zu können, sendet der zweite Sender Node B2 auf dem vorzugsweise selben Ressourcenelement f1, d. h. derselben ersten Frequenz, diese Daten der Abfolge von Datenzeitlich versetzt, z. B. verwürfelt, zu der entsprechenden Aussendung durch den ersten Sender Node B1. Dadurch besteht eine hohe Wahrscheinlichkeit, dass der Empfänger UE die fehlenden Daten auf Grund der zeitlichen Verwürfelung von dem zweiten Sender Node B2 empfangen kann.

**Patentansprüche**

1. Verfahren zum Übertragen von Daten,

   - bei dem Datenblöcke von Basisstationen an Teilnehmerstationen gesendet werden,
   - bei dem Datenblöcke, die von einer Basisstation gesendet werden, auch von weiteren Basisstationen an Teilnehmerstationen gesendet werden,
   **dadurch gekennzeichnet,**
   - **dass** Datenblöcke A,B,C,D von einer ersten Basisstation in einer vordefinierten ersten Abfolge (Abfolge 1) gesendet werden, und
   - **dass** Datenblöcke A,B,C,D von einer zweiten Basisstation in einer vordefinierten zweiten Abfolge (Abfolge 2) gesendet werden, und
   - **dass** Datenblöcke A,B,C,D von einer dritten Basisstation in einer vordefinierten dritten Abfolge (Abfolge 3) gesendet werden, und
   - **dass** Datenblöcke A,B,C,D von einer vierten Basisstation in einer vordefinierten vierten Abfolge (Abfolge 4) gesendet werden,

   wobei die Abfolgen folgendermaßen beschrieben werden oder beschreibbar sind:

   | Abfolge 1: | A B C D | A B C D | A B C D |
   |---|---|---|---|
   | Abfolge 2: | B A D C | D C B A | C D A B |
   | Abfolge 3: | C D A B | B A D C | D C B A |
   | Abfolge 4: | D C B A | C D A B | B A D C |

   oder

   | Abfolge 1: | A B C D | A B C D | A B C D |
   |---|---|---|---|
   | Abfolge 2: | B A D C | C D B A | C D B A |
   | Abfolge 3: | C D B A | B A D C | D C A B |
   | Abfolge 4: | D C A B | D C A B | B A D C |

   oder

| Abfolge 1: | A B C D | A B C D | A B C D |
| Abfolge 2: | B A D C | C D B A | D C A B |
| Abfolge 3: | C D B A | B A D C | C D B A |
| Abfolge 4: | D C A B | D C A B | B A D C |

oder

| Abfolge 1: | A B C D | A B C D | A B C D |
| Abfolge 2: | B A D C | C D B A | D C A B |
| Abfolge 3: | C D B A | D C A B | B A D C |
| Abfolge 4: | D C A B | B A D C | C D B A |

oder

| Abfolge 1: | A B C D | A B C D | A B C D |
| Abfolge 2: | B A D C | D C A B | D C A B |
| Abfolge 3: | C D B A | B A D C | C D B A |
| Abfolge 4: | D C A B | C D B A | B A D C |

oder

| Abfolge 1: | A B C D | A B C D | A B C D |
| Abfolge 2: | B A D C | B A D C | C D A B |
| Abfolge 3: | C D A B | D C B A | B A D C |
| Abfolge 4: | D C B A | C D A B | D C B A |

oder

| Abfolge 1: | A B C D | A B C D | A B C D |
| Abfolge 2: | B A D C | B A D C | C D A B |
| Abfolge 3: | C D A B | D C B A | D C B A |
| Abfolge 4: | D C B A | C D A B | B A D C |

oder

| Abfolge 1: | A B C D | A B C D | A B C D |
| Abfolge 2: | B A D C | C D A B | D C B A |
| Abfolge 3: | C D A B | B A D C | B A D C |
| Abfolge 4: | D C B A | D C B A | C D A B |

oder

| Abfolge 1: | A B C D | A B C D | A B C D |
| Abfolge 2: | B A D C | C D B A | C D B A |
| Abfolge 3: | C D A B | B A D C | B A D C |
| Abfolge 4: | D C B A | D C A B | D C A B |

oder

| Abfolge 1: | A B C D | A B C D | A B C D |
| Abfolge 2: | B A D C | C D B A | D C A B |

(fortgesetzt)

|            |         |         |         |
|------------|---------|---------|---------|
| Abfolge 3: | C D A B | B A D C | B A D C |
| Abfolge 4: | D C B A | D C A B | C D B A |

oder

| Abfolge 1: | A B C D | A B C D | A B C D |
|------------|---------|---------|---------|
| Abfolge 2: | B A D C | D C A B | C D B A |
| Abfolge 3: | C D A B | B A D C | B A D C |
| Abfolge 4: | D C B A | C D B A | D C A B |

oder

| Abfolge 1: | A B C D | A B C D | A B C D |
|------------|---------|---------|---------|
| Abfolge 2: | B A D C | D C A B | D C A B |
| Abfolge 3: | C D A B | B A D C | B A D C |
| Abfolge 4: | D C B A | C D B A | C D B A |

oder

| Abfolge 1: | A B C D | A B C D | A B C D |
|------------|---------|---------|---------|
| Abfolge 2: | A D C B | D C B A | C B D A |
| Abfolge 3: | B D A C | B D A C | D C A B |
| Abfolge 4: | C D B A | C A D B | D B A C |

oder

| Abfolge 1: | A B C D | A B C D | A B C D |
|------------|---------|---------|---------|
| Abfolge 2: | A D C B | D C B A | C B D A |
| Abfolge 3: | B D A C | C A D B | D C A B |
| Abfolge 4: | C D B A | B D A C | D B A C |

oder

| Abfolge 1: | A B C D | A B C D | A B C D |
|------------|---------|---------|---------|
| Abfolge 2: | A D C B | D C B A | D A C B |
| Abfolge 3: | B D A C | B D A C | C D B A |
| Abfolge 4: | C D B A | C A D B | B D C A |

oder

| Abfolge 1: | A B C D | A B C D | A B C D |
|------------|---------|---------|---------|
| Abfolge 2: | A D C B | D C B A | D A C B |
| Abfolge 3: | B D A C | C A D B | C D B A |
| Abfolge 4: | C D B A | B D A C | B D C A |

oder

| Abfolge 1: | A B C D | A B C D | A B C D |
|------------|---------|---------|---------|
| Abfolge 2: | C B A D | D C B A | D A C B |
| Abfolge 3: | B D A C | B D A C | C D B A |
| Abfolge 4: | D C A B | C A D B | B D C A |

oder

| Abfolge 1: | A B C D | A B C D | A B C D |
|---|---|---|---|
| Abfolge 2: | C B A D | D C B A | D A C B |
| Abfolge 3: | B D A C | C A D B | C D B A |
| Abfolge 4: | D C A B | B D A C | B D C A |

oder

| Abfolge 1: | A B C D | A B C D | A B C D |
|---|---|---|---|
| Abfolge 2: | C B A D | D C B A | C B D A |
| Abfolge 3: | B D A C | B D A C | D C A B |
| Abfolge 4: | D C A B | C A D B | D B A C |

oder

| Abfolge 1: | A B C D | A B C D | A B C D |
|---|---|---|---|
| Abfolge 2: | C B A D | D C B A | C B D A |
| Abfolge 3: | B D A C | C A D B | D C A B |
| Abfolge 4: | D C A B | B D A C | D B A C. |

2. Verfahren nach Anspruch 1,
bei dem die Datenblöcke jeweils innerhalb eines Übertragungszeitintervalls (TTI) übertragen werden,
bei dem die Länge eines Datenblocks A,B,C,D ein TTI beträgt.

3. Verfahren nach einem der vorhergehenden Ansprüche,

- bei dem eine Teilnehmerstation gleiche von verschiedenen Basisstationen gesendete Datenblöcke empfängt.

4. Verfahren nach einem der vorhergehenden Ansprüche,

- bei dem zumindest ein Datenblock, der von zumindest einer Basisstation gesendet wird, nicht oder nicht vollständig von der Teilnehmerstation empfangen oder verarbeitet wird, und
- bei dem eine Teilnehmerstation zur Rekonstruktion des nicht oder nicht vollständig empfangenen oder verarbeiteten Datenblocks einen gleichen Datenblock, der von einer anderen Basisstation gesendet wird, verwendet.

5. Satz von Basisstationen mit

- jeweils einer Sendeeinrichtung zum Senden von Datenblöcken A,B,C,D, an zumindest eine Teilnehmerstation und
- mit jeweils einer Prozessoreinrichtung zur Steuerung der Sendeeinrichtung derart, dass Datenblöcke, die von einer ersten Basisstation des Satzes von Basisstationen gesendet werden, auch von zumindest einer weiteren Basisstation des Satzes von Basisstationen an Teilnehmerstationen gesendet werden, **dadurch gekennzeichnet,**
- **dass** Datenblöcke A,B,C,D von der ersten Basisstation des Satzes von Basisstationen in einer vordefinierten ersten Abfolge gesendet werden, und
- **dass** Datenblöcke A,B,C,D von einer zweiten Basisstation des Satzes von Basisstationen in einer vordefinierten zweiten Abfolge gesendet werden, und
- **dass** Datenblöcke A,B,C,D von einer dritten Basisstation des Satzes von Basisstationen in einer vordefinierten dritten Abfolge gesendet werden, und
- **dass** Datenblöcke A,B,C,D von einer vierten Basisstation des Satzes von Basisstationen in einer vordefinierten vierten Abfolge gesendet werden,
- wobei die Abfolgen folgendermaßen beschrieben werden oder beschreibbar sind:

```
Abfolge 1:   A B C D   A B C D   A B C D
Abfolge 2:   B A D C   D C B A   C D A B
Abfolge 3:   C D A B   B A D C   D C B A
Abfolge 4:   D C B A   C D A B   B A D C
```

oder

```
Abfolge 1:   A B C D   A B C D   A B C D
Abfolge 2:   B A D C   C D B A   C D B A
Abfolge 3:   C D B A   B A D C   D C A B
Abfolge 4:   D C A B   D C A B   B A D C
```

oder

```
Abfolge 1:   A B C D   A B C D   A B C D
Abfolge 2:   B A D C   C D B A   D C A B
Abfolge 3:   C D B A   B A D C   C D B A
Abfolge 4:   D C A B   D C A B   B A D C
```

oder

```
Abfolge 1:   A B C D   A B C D   A B C D
Abfolge 2:   B A D C   C D B A   D C A B
Abfolge 3:   C D B A   D C A B   B A D C
Abfolge 4:   D C A B   B A D C   C D B A
```

oder

```
Abfolge 1:   A B C D   A B C D   A B C D
Abfolge 2:   B A D C   D C A B   D C A B
Abfolge 3:   C D B A   B A D C   C D B A
Abfolge 4:   D C A B   C D B A   B A D C
```

oder

```
Abfolge 1:   A B C D   A B C D   A B C D
Abfolge 2:   B A D C   B A D C   C D A B
Abfolge 3:   C D A B   D C B A   B A D C
Abfolge 4:   D C B A   C D A B   D C B A
```

oder

```
Abfolge 1:   A B C D   A B C D   A B C D
Abfolge 2:   B A D C   B A D C   C D A B
Abfolge 3:   C D A B   D C B A   D C B A
Abfolge 4:   D C B A   C D A B   B A D C
```

oder

```
Abfolge 1:   A B C D   A B C D   A B C D
Abfolge 2:   B A D C   C D A B   D C B A
```

(fortgesetzt)

| | | | |
|---|---|---|---|
| Abfolge 3: | C D A B | B A D C | B A D C |
| Abfolge 4: | D C B A | D C B A | C D A B |

oder

| | | | |
|---|---|---|---|
| Abfolge 1: | A B C D | A B C D | A B C D |
| Abfolge 2: | B A D C | C D B A | C D B A |
| Abfolge 3: | C D A B | B A D C | B A D C |
| Abfolge 4: | D C B A | D C A B | D C A B |

oder

| | | | |
|---|---|---|---|
| Abfolge 1: | A B C D | A B C D | A B C D |
| Abfolge 2: | B A D C | C D B A | D C A B |
| Abfolge 3: | C D A B | B A D C | B A D C |
| Abfolge 4: | D C B A | D C A B | C D B A |

oder

| | | | |
|---|---|---|---|
| Abfolge 1: | A B C D | A B C D | A B C D |
| Abfolge 2: | B A D C | D C A B | C D B A |
| Abfolge 3: | C D A B | B A D C | B A D C |
| Abfolge 4: | D C B A | C D B A | D C A B |

oder

| | | | |
|---|---|---|---|
| Abfolge 1: | A B C D | A B C D | A B C D |
| Abfolge 2: | B A D C | D C A B | D C A B |
| Abfolge 3: | C D A B | B A D C | B A D C |
| Abfolge 4: | D C B A | C D B A | C D B A |

oder

| | | | |
|---|---|---|---|
| Abfolge 1: | A B C D | A B C D | A B C D |
| Abfolge 2: | A D C B | D C B A | C B D A |
| Abfolge 3: | B D A C | B D A C | D C A B |
| Abfolge 4: | C D B A | C A D B | D B A C |

oder

| | | | |
|---|---|---|---|
| Abfolge 1: | A B C D | A B C D | A B C D |
| Abfolge 2: | A D C B | D C B A | C B D A |
| Abfolge 3: | B D A C | C A D B | D C A B |
| Abfolge 4: | C D B A | B D A C | D B A C |

oder

| | | | |
|---|---|---|---|
| Abfolge 1: | A B C D | A B C D | A B C D |
| Abfolge 2: | A D C B | D C B A | D A C B |
| Abfolge 3: | B D A C | B D A C | C D B A |
| Abfolge 4: | C D B A | C A D B | B D C A |

oder

| | | | |
|---|---|---|---|
| Abfolge 1: | A B C D | A B C D | A B C D |
| Abfolge 2: | A D C B | D C B A | D A C B |
| Abfolge 3: | B D A C | C A D B | C D B A |
| Abfolge 4: | C D B A | B D A C | B D C A |

oder

| | | | |
|---|---|---|---|
| Abfolge 1: | A B C D | A B C D | A B C D |
| Abfolge 2: | C B A D | D C B A | D A C B |
| Abfolge 3: | B D A C | B D A C | C D B A |
| Abfolge 4: | D C A B | C A D B | B D C A |

oder

| | | | |
|---|---|---|---|
| Abfolge 1: | A B C D | A B C D | A B C D |
| Abfolge 2: | C B A D | D C B A | D A C B |
| Abfolge 3: | B D A C | C A D B | C D B A |
| Abfolge 4: | D C A B | B D A C | B D C A |

oder

| | | | |
|---|---|---|---|
| Abfolge 1: | A B C D | A B C D | A B C D |
| Abfolge 2: | C B A D | D C B A | C B D A |
| Abfolge 3: | B D A C | B D A C | D C A B |
| Abfolge 4: | D C A B | C A D B | D B A C |

oder

| | | | |
|---|---|---|---|
| Abfolge 1: | A B C D | A B C D | A B C D |
| Abfolge 2: | C B A D | D C B A | C B D A |
| Abfolge 3: | B D A C | C A D B | D C A B |
| Abfolge 4: | D C A B | B D A C | D B A C. |

6. Teilnehmerstation mit

- einer Empfangseinrichtung zum Empfang von Datenblöcken verschiedener Basisstationen, und
- einer Prozessoreinrichtung zur Steuerung der Empfangseinrichtung derart, dass

für den Fall, dass ein Datenblock, der von einer ersten Basisstation eines Satzes von Basisstationen gesendet wird, von der Teilnehmerstation nicht oder nicht vollständig empfangen oder verarbeitet wird, die Empfangseinrichtung auf den Empfang des gleichen Datenblocks, der von einer anderen Basisstation des Satzes von Basisstationen gesendet wird, geschaltet wird, und dieser Datenblock zur Rekonstruktion des Datenblocks verwendet wird,

**dadurch gekennzeichnet,**
- **dass** die Datenblöcke A,B,C,D von der ersten Basisstation des Satzes von Basisstationen in einer vordefinierten ersten Abfolge gesendet werden, und
- **dass** die Datenblöcke A,B,C,D von einer zweiten Basisstation des Satzes von Basisstationen in einer vordefinierten zweiten Abfolge gesendet werden, und
- **dass** die Datenblöcke A,B,C,D von einer dritten Basisstation des Satzes von Basisstationen in einer vordefinierten dritten Abfolge gesendet werden, und
- **dass** die Datenblöcke A,B,C,D von einer vierten Basisstation des Satzes von Basisstationen in einer vordefinierten vierten Abfolge gesendet werden,

- wobei die Abfolgen folgendermaßen beschrieben werden oder beschreibbar sind:

Abfolge 1:    A B C D    A B C D    A B C D
Abfolge 2:    B A D C    D C B A    C D A B
Abfolge 3:    C D A B    B A D C    D C B A
Abfolge 4:    D C B A    C D A B    B A D C

oder

Abfolge 1:    A B C D    A B C D    A B C D
Abfolge 2:    B A D C    C D B A    C D B A
Abfolge 3:    C D B A    B A D C    D C A B
Abfolge 4:    D C A B    D C A B    B A D C

oder

Abfolge 1:    A B C D    A B C D    A B C D
Abfolge 2:    B A D C    C D B A    D C A B
Abfolge 3:    C D B A    B A D C    C D B A
Abfolge 4:    D C A B    D C A B    B A D C

oder

Abfolge 1:    A B C D    A B C D    A B C D
Abfolge 2:    B A D C    C D B A    D C A B
Abfolge 3:    C D B A    D C A B    B A D C
Abfolge 4:    D C A B    B A D C    C D B A

oder

Abfolge 1:    A B C D    A B C D    A B C D
Abfolge 2:    B A D C    D C A B    D C A B
Abfolge 3:    C D B A    B A D C    C D B A
Abfolge 4:    D C A B    C D B A    B A D C

oder

Abfolge 1:    A B C D    A B C D    A B C D
Abfolge 2:    B A D C    B A D C    C D A B
Abfolge 3:    C D A B    D C B A    B A D C
Abfolge 4:    D C B A    C D A B    D C B A

oder

Abfolge 1:    A B C D    A B C D    A B C D
Abfolge 2:    B A D C    B A D C    C D A B
Abfolge 3:    C D A B    D C B A    D C B A
Abfolge 4:    D C B A    C D A B    B A D C

oder

Abfolge 1:    A B C D    A B C D    A B C D

(fortgesetzt)

| | Abfolge 2: | B A D C | C D A B | D C B A |
| --- | --- | --- | --- | --- |
| | Abfolge 3: | C D A B | B A D C | B A D C |
| | Abfolge 4: | D C B A | D C B A | C D A B |

oder

| | Abfolge 1: | A B C D | A B C D | A B C D |
| --- | --- | --- | --- | --- |
| | Abfolge 2: | B A D C | C D B A | C D B A |
| | Abfolge 3: | C D A B | B A D C | B A D C |
| | Abfolge 4: | D C B A | D C A B | D C A B |

oder

| | Abfolge 1: | A B C D | A B C D | A B C D |
| --- | --- | --- | --- | --- |
| | Abfolge 2: | B A D C | C D B A | D C A B |
| | Abfolge 3: | C D A B | B A D C | B A D C |
| | Abfolge 4: | D C B A | D C A B | C D B A |

oder

| | Abfolge 1: | A B C D | A B C D | A B C D |
| --- | --- | --- | --- | --- |
| | Abfolge 2: | B A D C | D C A B | C D B A |
| | Abfolge 3: | C D A B | B A D C | B A D C |
| | Abfolge 4: | D C B A | C D B A | D C A B |

oder

| | Abfolge 1: | A B C D | A B C D | A B C D |
| --- | --- | --- | --- | --- |
| | Abfolge 2: | B A D C | D C A B | D C A B |
| | Abfolge 3: | C D A B | B A D C | B A D C |
| | Abfolge 4: | D C B A | C D B A | C D B A |

oder

| | Abfolge 1: | A B C D | A B C D | A B C D |
| --- | --- | --- | --- | --- |
| | Abfolge 2: | A D C B | D C B A | C B D A |
| | Abfolge 3: | B D A C | B D A C | D C A B |
| | Abfolge 4: | C D B A | C A D B | D B A C |

oder

| | Abfolge 1: | A B C D | A B C D | A B C D |
| --- | --- | --- | --- | --- |
| | Abfolge 2: | A D C B | D C B A | C B D A |
| | Abfolge 3: | B D A C | C A D B | D C A B |
| | Abfolge 4: | C D B A | B D A C | D B A C |

oder

| | Abfolge 1: | A B C D | A B C D | A B C D |
| --- | --- | --- | --- | --- |
| | Abfolge 2: | A D C B | D C B A | D A C B |

(fortgesetzt)

| | | | |
|---|---|---|---|
| Abfolge 3: | B D A C | B D A C | C D B A |
| Abfolge 4: | C D B A | C A D B | B D C A |

oder

| | | | |
|---|---|---|---|
| Abfolge 1: | A B C D | A B C D | A B C D |
| Abfolge 2: | A D C B | D C B A | D A C B |
| Abfolge 3: | B D A C | C A D B | C D B A |
| Abfolge 4: | C D B A | B D A C | B D C A |

oder

| | | | |
|---|---|---|---|
| Abfolge 1: | A B C D | A B C D | A B C D |
| Abfolge 2: | C B A D | D C B A | D A C B |
| Abfolge 3: | B D A C | B D A C | C D B A |
| Abfolge 4: | D C A B | C A D B | B D C A |

oder

| | | | |
|---|---|---|---|
| Abfolge 1: | A B C D | A B C D | A B C D |
| Abfolge 2: | C B A D | D C B A | D A C B |
| Abfolge 3: | B D A C | C A D B | C D B A |
| Abfolge 4: | D C A B | B D A C | B D C A |

oder

| | | | |
|---|---|---|---|
| Abfolge 1: | A B C D | A B C D | A B C D |
| Abfolge 2: | C B A D | D C B A | C B D A |
| Abfolge 3: | B D A C | B D A C | D C A B |
| Abfolge 4: | D C A B | C A D B | D B A C |

oder

| | | | |
|---|---|---|---|
| Abfolge 1: | A B C D | A B C D | A B C D |
| Abfolge 2: | C B A D | D C B A | C B D A |
| Abfolge 3: | B D A C | C A D B | D C A B |
| Abfolge 4: | D C A B | B D A C | D B A C. |

## Claims

1. Data transmission method,

   - in which data blocks are sent from nodes to user equipment,
   - in which data blocks that are sent from a node are also sent from further nodes to user equipment,
   **characterised in that**,
   - data blocks A, B, C, D are sent from a first node in a predefined first sequence (sequence 1), and
   - data blocks A, B, C, D are sent from a second node in a predefined second sequence (sequence 2), and
   - data blocks A, B, C, D are sent from a third node in a predefined third sequence (sequence 3), and
   - data blocks A, B, C, D are sent from a fourth node in a predefined fourth sequence (sequence 4),
   whereby the sequences are written or are able to be written as follows:

| Sequence 1: | ABCD | ABCD | ABCD |
|---|---|---|---|
| Sequence 2: | BADC | DCBA | CDAB |
| Sequence 3: | CDAB | BADC | DCBA |
| Sequence 4: | DCBA | CDAB | BADC |

or

| Sequence 1: | ABCD | ABCD | ABCD |
|---|---|---|---|
| Sequence 2: | BADC | CDBA | CDBA |
| Sequence 3: | CDBA | BADC | DCAB |
| Sequence 4: | DCAB | DCAB | BADC |

or

| Sequence 1: | ABCD | ABCD | ABCD |
|---|---|---|---|
| Sequence 2: | BADC | CDBA | DCAB |
| Sequence 3: | CDBA | BADC | CDBA |
| Sequence 4: | DCAB | DCAB | BADC |

or

| Sequence 1: | ABCD | ABCD | ABCD |
|---|---|---|---|
| Sequence 2: | BADC | CDBA | DCAB |
| Sequence 3: | CDBA | DCAB | BADC |
| Sequence 4: | DCAB | BADC | CDBA |

or

| Sequence 1: | ABCD | ABCD | ABCD |
|---|---|---|---|
| Sequence 2: | BADC | DCAB | DCAB |
| Sequence 3: | CDBA | BADC | CDBA |
| Sequence 4: | DCAB | CDBA | BADC |

or

| Sequence 1: | ABCD | ABCD | ABCD |
|---|---|---|---|
| Sequence 2: | BADC | BADC | CDAB |
| Sequence 3: | CDAB | DCBA | BADC |
| Sequence 4: | DCBA | CDAB | DCBA |

or

| Sequence 1: | ABCD | ABCD | ABCD |
|---|---|---|---|
| Sequence 2: | BADC | BADC | CDAB |
| Sequence 3: | CDAB | DCBA | DCBA |
| Sequence 4: | DCBA | CDAB | BADC |

or

| Sequence 1: | ABCD | ABCD | ABCD |
|---|---|---|---|
| Sequence 2: | BADC | CDAB | DCBA |

(continued)

| | | | |
|---|---|---|---|
| Sequence 3: | CDAB | BADC | BADC |
| Sequence 4: | DCBA | DCBA | CDAB |

or

| | | | |
|---|---|---|---|
| Sequence 1: | ABCD | ABCD | ABCD |
| Sequence 2: | BADC | CDBA | CDBA |
| Sequence 3: | CDAB | BADC | BADC |
| Sequence 4: | DCBA | DCAB | DCAB |

or

| | | | |
|---|---|---|---|
| Sequence 1: | ABCD | ABCD | ABCD |
| Sequence 2: | BADC | CDBA | DCAB |
| Sequence 3: | CDAB | BADC | BADC |
| Sequence 4: | DCBA | DCAB | CDBA |

or

| | | | |
|---|---|---|---|
| Sequence 1: | ABCD | ABCD | ABCD |
| Sequence 2: | BADC | DCAB | CDBA |
| Sequence 3: | CDAB | BADC | BADC |
| Sequence 4: | DCBA | CDBA | DCAB |

or

| | | | |
|---|---|---|---|
| Sequence 1: | ABCD | ABCD | ABCD |
| Sequence 2: | BADC | DCAB | DCAB |
| Sequence 3: | CDAB | BADC | BADC |
| Sequence 4: | DCBA | CDBA | CDBA |

or

| | | | |
|---|---|---|---|
| Sequence 1: | ABCD | ABCD | ABCD |
| Sequence 2: | ADCB | DCBA | CBDA |
| Sequence 3: | BDAC | BDAC | DCAB |
| Sequence 4: | CDBA | CADB | DBAC |

or

| | | | |
|---|---|---|---|
| Sequence 1: | ABCD | ABCD | ABCD |
| Sequence 2: | ADCB | DCBA | CBDA |
| Sequence 3: | BDAC | CADB | DCAB |
| Sequence 4: | CDBA | BDAC | DBAC |

or

| | | | |
|---|---|---|---|
| Sequence 1: | ABCD | ABCD | ABCD |
| Sequence 2: | ADCB | DCBA | DACB |
| Sequence 3: | BDAC | BDAC | CDBA |
| Sequence 4: | CDBA | CADB | BDCA |

or

| Sequence 1: | ABCD | ABCD | ABCD |
|---|---|---|---|
| Sequence 2: | ADCB | DCBA | DACE |
| Sequence 3: | BDAC | CADB | CDBA |
| Sequence 4: | CDBA | EDAC | BDCA |

or

| Sequence 1: | ABCD | ABCD | ABCD |
|---|---|---|---|
| Sequence 2: | CBAD | DCBA | DACB |
| Sequence 3: | BDAC | BDAC | CDBA |
| Sequence 4: | DCAB | CADB | BDCA |

or

| Sequence 1: | ABCD | ABCD | ABCD |
|---|---|---|---|
| Sequence 2: | CBAD | DCBA | DACB |
| Sequence 3: | BDAC | CADB | CDBA |
| Sequence 4: | DCAB | BDAC | BDCA |

or

| Sequence 1: | ABCD | ABCD | ABCD |
|---|---|---|---|
| Sequence 2: | CBAD | DCBA | CBDA |
| Sequence 3: | BDAC | BDAC | DCAB |
| Sequence 4: | DCAB | CADB | DBAC |

or

| Sequence 1: | ABCD | ABCD | ABCD |
|---|---|---|---|
| Sequence 2: | CBAD | DCBA | CBDA |
| Sequence 3: | BDAC | CADB | DCAB |
| Sequence 4: | DCAB | BDAC | DBAC. |

2. Method according to claim 1,
   in which the data blocks are each transmitted within a transmission time interval (TTI),
   in which the length of a data block A,B,C,D amounts to a TTI.

3. Method according to one of the preceding claims, - in which user equipment receives identical data blocks sent by different nodes.

4. Method according to one of the preceding claims,

   - in which at least one data block that is sent by at least one node is not received or processed or is not completely received or processed by the subscriber station, and
   - in which user equipment, for reconstruction of the data block not received or processed or not completely received or processed, uses an identical data block that is sent by another node.

5. Set of nodes with

   - a transmission device in each case for sending data blocks A,B,C,D, to at least one subscriber station and
   - with a processor device in each case for controlling the transmission device such that

data blocks that are sent from a first node of the set of nodes are also sent to user equipment from at least one further node of the set of nodes,

**characterized in that,**

- data blocks A,B,C,D are sent from the first node of the set of nodes in a predefined first sequence, and
- data blocks A,B,C,D are sent from a second node of the set of nodes in a predefined second sequence, and
- data blocks A,B,C,D are sent from a third node of the set of nodes in a predefined third sequence, and
- data blocks A,B,C,D are sent from a fourth node of the set of nodes in a predefined fourth sequence,
- whereby the sequences are written or are able to be written as follows:

| Sequence 1: | ABCD | ABCD | ABCD |
|---|---|---|---|
| Sequence 2: | BADC | DCBA | CDAB |
| Sequence 3: | CDAB | BADC | DCBA |
| Sequence 4: | DCBA | CDAB | BADC |

or

| Sequence 1: | ABCD | ABCD | ABCD |
|---|---|---|---|
| Sequence 2: | BADC | CDBA | CDBA |
| Sequence 3: | CDBA | BADC | DCAB |
| Sequence 4: | DCAB | DCAB | BADC |

or

| Sequence 1: | ABCD | ABCD | ABCD |
|---|---|---|---|
| Sequence 2: | BADC | CDBA | DCAB |
| Sequence 3: | CDBA | BADC | CDBA |
| Sequence 4: | DCAB | DCAB | BADC |

or

| Sequence 1: | ABCD | ABCD | ABCD |
|---|---|---|---|
| Sequence 2: | BADC | CDBA | DCAB |
| Sequence 3: | CDBA | DCAB | BADC |
| Sequence 4: | DCAB | BADC | CDBA |

or

| Sequence 1: | ABCD | ABCD | ABCD |
|---|---|---|---|
| Sequence 2: | BADC | DCAB | DCAB |
| Sequence 3: | CDBA | BADC | CDBA |
| Sequence 4: | DCAB | CDBA | BADC |

or

| Sequence 1: | ABCD | ABCD | ABCD |
|---|---|---|---|
| Sequence 2: | BADC | BADC | CDAB |
| Sequence 3: | CDAB | DCBA | BADC |
| Sequence 4: | DCBA | CDAB | DCBA |

or

| Sequence 1: | ABCD | ABCD | ABCD |
|---|---|---|---|
| Sequence 2: | BADC | BADC | CDAB |

(continued)

| | | | |
|---|---|---|---|
| Sequence 3: | CDAB | DCBA | DCBA |
| Sequence 4: | DCBA | CDAB | BADC |

or

| | | | |
|---|---|---|---|
| Sequence 1: | ABCD | ABCD | ABCD |
| Sequence 2: | BADC | CDAB | DCBA |
| Sequence 3: | CDAB | BADC | BADC |
| Sequence 4: | DCBA | DCBA | CDAB |

or

| | | | |
|---|---|---|---|
| Sequence 1: | ABCD | ABCD | ABCD |
| Sequence 2: | BADC | CDBA | CDBA |
| Sequence 3: | CDAB | BADC | BADC |
| Sequence 4: | DCBA | DCAB | DCAB |

or

| | | | |
|---|---|---|---|
| Sequence 1: | ABCD | ABCD | ABCD |
| Sequence 2: | BADC | CDBA | DCAB |
| Sequence 3: | CDAB | BADC | BADC |
| Sequence 4: | DCBA | DCAB | CDBA |

or

| | | | |
|---|---|---|---|
| Sequence 1: | ABCD | ABCD | ABCD |
| Sequence 2: | BADC | DCAB | CDBA |
| Sequence 3: | CDAB | BADC | BADC |
| Sequence 4: | DCBA | CDBA | DCAB |

or

| | | | |
|---|---|---|---|
| Sequence 1: | ABCD | ABCD | ABCD |
| Sequence 2: | BADC | DCAB | DCAB |
| Sequence 3: | CDAB | BADC | BADC |
| Sequence 4: | DCBA | CDBA | CDBA |

or

| | | | |
|---|---|---|---|
| Sequence 1: | ABCD | ABCD | ABCD |
| Sequence 2: | ADCB | DCBA | CBDA |
| Sequence 3: | BDAC | BDAC | DCAB |
| Sequence 4: | CDBA | CADB | DBAC |

or

| | | | |
|---|---|---|---|
| Sequence 1: | ABCD | ABCD | ABCD |
| Sequence 2: | ADCB | DCBA | CBDA |
| Sequence 3: | BDAC | CADB | DCAB |
| Sequence 4: | CDBA | BDAC | DBAC |

or

| Sequence 1: | ABCD | ABCD | ABCD |
| Sequence 2: | ADCB | DCBA | DACB |
| Sequence 3: | BDAC | BDAC | CDBA |
| Sequence 4: | CDBA | CADB | BDCA |

or

| Sequence 1: | ABCD | ABCD | ABCD |
| Sequence 2: | ADCB | DCBA | DACB |
| Sequence 3: | BDAC | CADB | CDBA |
| Sequence 4: | CDBA | BDAC | BDCA |

or

| Sequence 1: | ABCD | ABCD | ABCD |
| Sequence 2: | CBAD | DCBA | DACB |
| Sequence 3: | BDAC | BDAC | CDBA |
| Sequence 4: | DCAB | CADB | BDCA |

or

| Sequence 1: | ABCD | ABCD | ABCD |
| Sequence 2: | CBAD | DCBA | DACB |
| Sequence 3: | BDAC | CADB | CDBA |
| Sequence 4: | DCAB | BDAC | BDCA |

or

| Sequence 1: | ABCD | ABCD | ABCD |
| Sequence 2: | CBAD | DCBA | CBDA |
| Sequence 3: | BDAC | BDAC | DCAB |
| Sequence 4: | DCAB | CADB | DBAC |

or

| Sequence 1: | ABCD | ABCD | ABCD |
| Sequence 2: | CBAD | DCBA | CBDA |
| Sequence 3: | BDAC | CADB | DCAB |
| Sequence 4: | DCAB | BDAC | DBAC. |

6. Subscriber station with

- a receive device for receiving data blocks of different nodes, and
- a processor device for controlling the receive device such that,

in the event of a data block being sent from a first node of a set of nodes not being received or processed or not being completely received or processed by the subscriber station, the receive device is switched to receive the same data block which is sent by another node of the set of nodes, and this data block is used for reconstruction of the data block, **characterised in that**
- the data blocks A,B,C,D are sent from the first node of the set of nodes in a predefined first sequence, and
- the data blocks A,B,C,D from a second node of the set of nodes in a predefined second sequence, and

- the data blocks A,B,C,D from a third node of the set of nodes in a predefined third sequence, and
- the data blocks A,B,C,D are sent from a fourth node of the set of nodes in a predefined fourth sequence,
- whereby the sequences are written or are able to be written as follows:

| | | | |
|---|---|---|---|
| Sequence 1: | ABCD | ABCD | ABCD |
| Sequence 2: | BADC | DCBA | CDAB |
| Sequence 3: | CDAB | BADC | DCBA |
| Sequence 4: | DCBA | CDAB | BADC |

or

| | | | |
|---|---|---|---|
| Sequence 1: | ABCD | ABCD | ABCD |
| Sequence 2: | BADC | CDBA | CDBA |
| Sequence 3: | CDBA | BADC | DCAB |
| Sequence 4: | DCAB | DCAB | BADC |

or

| | | | |
|---|---|---|---|
| Sequence 1: | ABCD | ABCD | ABCD |
| Sequence 2: | BADC | CDBA | DCAB |
| Sequence 3: | CDBA | BADC | CDBA |
| Sequence 4: | DCAB | DCAB | BADC |

or

| | | | |
|---|---|---|---|
| Sequence 1: | ABCD | ABCD | ABCD |
| Sequence 2: | BADC | CDBA | DCAB |
| Sequence 3: | CDBA | DCAB | BADC |
| Sequence 4: | DCAB | BADC | CDBA |

or

| | | | |
|---|---|---|---|
| Sequence 1: | ABCD | ABCD | ABCD |
| Sequence 2: | BADC | DCAB | DCAB |
| Sequence 3: | CDBA | BADC | CDBA |
| Sequence 4: | DCAB | CDBA | BADC |

or

| | | | |
|---|---|---|---|
| Sequence 1: | ABCD | ABCD | ABCD |
| Sequence 2: | BADC | BADC | CDAB |
| Sequence 3: | CDAB | DCBA | BADC |
| Sequence 4: | DCBA | CDAB | DCBA |

or

| | | | |
|---|---|---|---|
| Sequence 1: | ABCD | ABCD | ABCD |
| Sequence 2: | BADC | BADC | CDAB |
| Sequence 3: | CDAB | DCBA | DCBA |
| Sequence 4: | DCBA | CDAB | BADC |

or

| | | | |
|---|---|---|---|
| Sequence 1: | ABCD | ABCD | ABCD |
| Sequence 2: | BADC | CDAB | DCBA |
| Sequence 3: | CDAB | BADC | BADC |
| Sequence 4: | DCBA | DCBA | CDAB |

or

| | | | |
|---|---|---|---|
| Sequence 1: | ABCD | ABCD | ABCD |
| Sequence 2: | BADC | CDBA | CDBA |
| Sequence 3: | CDAB | BADC | BADC |
| Sequence 4: | DCBA | DCAB | DCAB |

or

| | | | |
|---|---|---|---|
| Sequence 1: | ABCD | ABCD | ABCD |
| Sequence 2: | BADC | CDBA | DCAB |
| Sequence 3: | CDAB | BADC | BADC |
| Sequence 4: | DCBA | DCAB | CDBA |

or

| | | | |
|---|---|---|---|
| Sequence 1: | ABCD | ABCD | ABCD |
| Sequence 2: | BADC | DCAB | CDBA |
| Sequence 3: | CDAB | BADC | BADC |
| Sequence 4: | DCBA | CDBA | DCAB |

or

| | | | |
|---|---|---|---|
| Sequence 1: | ABCD | ABCD | ABCD |
| Sequence 2: | BADC | DCAB | DCAB |
| Sequence 3: | CDAB | BADC | BADC |
| Sequence 4: | DCBA | CDBA | CDBA |

or

| | | | |
|---|---|---|---|
| Sequence 1: | ABCD | ABCD | ABCD |
| Sequence 2: | ADCB | DCBA | CBDA |
| Sequence 3: | BDAC | BDAC | DCAB |
| Sequence 4: | CDBA | CADB | DBAC |

or

| | | | |
|---|---|---|---|
| Sequence 1: | ABCD | ABCD | ABCD |
| Sequence 2: | ADCB | DCBA | CBDA |
| Sequence 3: | BDAC | CADB | DCAB |
| Sequence 4: | CDBA | BDAC | DBAC |

or

| | | | |
|---|---|---|---|
| Sequence 1: | ABCD | ABCD | ABCD |
| Sequence 2: | ADCB | DCBA | DACB |

(continued)

| | | | |
|---|---|---|---|
| Sequence 3: | BDAC | BDAC | CDBA |
| Sequence 4: | CDBA | CADB | BDCA |

or

| | | | |
|---|---|---|---|
| Sequence 1: | ABCD | ABCD | ABCD |
| Sequence 2: | ADCB | DCBA | DACB |
| Sequence 3: | BDAC | CADB | CDBA |
| Sequence 4: | CDBA | BDAC | BDCA |

or

| | | | |
|---|---|---|---|
| Sequence 1: | ABCD | ABCD | ABCD |
| Sequence 2: | CBAD | DCBA | DACB |
| Sequence 3: | BDAC | BDAC | CDBA |
| Sequence 4: | DCAB | CADB | BDCA |

or

| | | | |
|---|---|---|---|
| Sequence 1: | ABCD | ABCD | ABCD |
| Sequence 2: | CBAD | DCBA | DACB |
| Sequence 3: | BDAC | CADB | CDBA |
| Sequence 4: | DCAB | BDAC | BDCA |

or

| | | | |
|---|---|---|---|
| Sequence 1: | ABCD | ABCD | ABCD |
| Sequence 2: | CBAD | DCBA | CBDA |
| Sequence 3: | BDAC | BDAC | DCAB |
| Sequence 4: | DCAB | CADB | DBAC |

or

| | | | |
|---|---|---|---|
| Sequence 1: | ABCD | ABCD | ABCD |
| Sequence 2: | CBAD | DCBA | CBDA |
| Sequence 3: | BDAC | CADB | DCAB |
| Sequence 4: | DCAB | BDAC | DBAC. |

## Revendications

1. Procédé de transmission de données, dans lequel :

- des blocs de données sont envoyés par des stations de base à des stations d'usagers ;
- des blocs de données qui sont émis par une station de base sont également envoyés par d'autres stations de base à des stations d'usagers ;
**caractérisé en ce que** :
- des blocs de données A, B, C, D sont émis par une première station de base dans un premier ordre prédéterminé (séquence 1) ; et
- des blocs de données A, B, C, D sont émis par une deuxième station de base dans un deuxième ordre prédéterminé (séquence 2) ; et

- des blocs de données A, B, C, D sont émis par une troisième station de base dans un troisième ordre prédéterminé (séquence 3) ; et

- des blocs de données A, B, C, D sont émis par une quatrième station de base dans un quatrième ordre prédéterminé (séquence 4) ;

les séquences étant décrites ou pouvant être décrites comme suit :

| séquence 1 : | A B C D | A B C D | A B C D |
|---|---|---|---|
| séquence 2 : | B A D C | D C B A | C D A B |
| séquence 3 : | C D A B | B A D C | D C B A |
| séquence 4 : | D C B A | C D A B | B A D C |

ou

| séquence 1 : | A B C D | A B C D | A B C D |
|---|---|---|---|
| séquence 2 : | B A D C | C D B A | C D B A |
| séquence 3 : | C D B A | B A D C | D C A B |
| séquence 4 : | D C A B | D C A B | B A D C |

ou

| séquence 1 : | A B C D | A B C D | A B C D |
|---|---|---|---|
| séquence 2 : | B A D C | C D B A | D C A B |
| séquence 3 : | C D B A | B A D C | C D B A |
| séquence 4 : | D C A B | D C A B | B A D C |

ou

| séquence 1 : | A B C D | A B C D | A B C D |
|---|---|---|---|
| séquence 2 : | B A D C | C D B A | D C A B |
| séquence 3 : | C D B A | D C A B | B A D C |
| séquence 4 : | D C A B | B A D C | C D B A |

ou

| séquence 1 : | A B C D | A B C D | A B C D |
|---|---|---|---|
| séquence 2 : | B A D C | D C A B | D C A B |
| séquence 3 : | C D B A | B A D C | C D B A |
| séquence 4 : | D C A B | C D B A | B A D C |

ou

| séquence 1 : | A B C D | A B C D | A B C D |
|---|---|---|---|
| séquence 2 : | B A D C | B A D C | C D A B |
| séquence 3 : | C D A B | D C B A | B A D C |
| séquence 4 : | D C B A | C D A B | D C B A |

ou

| séquence 1 : | A B C D | A B C D | A B C D |
|---|---|---|---|
| séquence 2 : | B A D C | B A D C | C D A B |
| séquence 3 : | C D A B | D C B A | D C B A |
| séquence 4 : | D C B A | C D A B | B A D C |

ou

| | | | |
|---|---|---|---|
| séquence 1 : | A B C D | A B C D | A B C D |
| séquence 2 : | B A D C | C D A B | D C B A |
| séquence 3 : | C D A B | B A D C | B A D C |
| séquence 4 : | D C B A | D C B A | C D A B |

ou

| | | | |
|---|---|---|---|
| séquence 1 : | A B C D | A B C D | A B C D |
| séquence 2 : | B A D C | C D B A | C D B A |
| séquence 3 : | C D A B | B A D C | B A D C |
| séquence 4 : | D C B A | D C A B | D C A B |

ou

| | | | |
|---|---|---|---|
| séquence 1 : | A B C D | A B C D | A B C D |
| séquence 2 : | B A D C | C D B A | D C A B |
| séquence 3 : | C D A B | B A D C | B A D C |
| séquence 4 : | D C B A | D C A B | C D B A |

ou

| | | | |
|---|---|---|---|
| séquence 1 : | A B C D | A B C D | A B C D |
| séquence 2 : | B A D C | D C A B | C D B A |
| séquence 3 : | C D A B | B A D C | B A D C |
| séquence 4 : | D C B A | C D B A | D C A B |

ou

| | | | |
|---|---|---|---|
| séquence 1 : | A B C D | A B C D | A B C D |
| séquence 2 : | B A D C | D C A B | D C A B |
| séquence 3 : | C D A B | B A D C | B A D C |
| séquence 4 : | D C B A | C D B A | C D B A |

ou

| | | | |
|---|---|---|---|
| séquence 1 : | A B C D | A B C D | A B C D |
| séquence 2 : | A D C B | D C B A | C B D A |
| séquence 3 : | B D A C | B D A C | D C A B |
| séquence 4 : | C D B A | C A D B | D B A C |

ou

| | | | |
|---|---|---|---|
| séquence 1 : | A B C D | A B C D | A B C D |
| séquence 2 : | A D C B | D C B A | C B D A |
| séquence 3 : | B D A C | C A D B | D C A B |
| séquence 4 : | C D B A | B D A C | D B A C |

ou

| | | | |
|---|---|---|---|
| séquence 1 : | A B C D | A B C D | A B C D |

(suite)

```
séquence 2 :   A D C B     D C B A     D A C B
séquence 3 :   B D A C     B D A C     C D B A
séquence 4 :   C D B A     C A D B     B D C A
```

ou

```
séquence 1 :   A B C D     A B C D     A B C D
séquence 2 :   A D C B     D C B A     D A C B
séquence 3 :   B D A C     C A D B     C D B A
séquence 4 :   C D B A     B D A C     B D C A
```

ou

```
séquence 1 :   A B C D     A B C D     A B C D
séquence 2 :   C B A D     D C B A     D A C B
séquence 3 :   B D A C     B D A C     C D B A
séquence 4 :   D C A B     C A D B     B D C A
```

ou

```
séquence 1 :   A B C D     A B C D     A B C D
séquence 2 :   C B A D     D C B A     D A C B
séquence 3 :   B D A C     C A D B     C D B A
séquence 4 :   D C A B     B D A C     B D C A
```

ou

```
séquence 1 :   A B C D     A B C D     A B C D
séquence 2 :   C B A D     D C B A     C B D A
séquence 3 :   B D A C     B D A C     D C A B
séquence 4 :   D C A B     C A D B     D B A C
```

ou

```
séquence 1 :   A B C D     A B C D     A B C D
séquence 2 :   C B A D     D C B A     C B D A
séquence 3 :   B D A C     C A D B     D C A B
séquence 4 :   D C A B     B D A C     D B A C.
```

**2.** Procédé selon la revendication 1, dans lequel les blocs de données sont respectivement transmis dans un intervalle de temps de transmission (TTI) dans lequel la longueur d'un bloc de données A, B, C, D est égale à un TTI.

**3.** Procédé selon l'une des revendications précédentes, dans lequel une station d'usager reçoit de mêmes blocs de données émis par des stations de base différentes.

**4.** Procédé selon l'une des revendications précédentes, dans lequel :

- au moins un bloc de données émis par au moins une station de base n'est pas ou pas entièrement reçu ou traité par la station d'usager ; et
- une station d'usager utilise, pour reconstruire le bloc de données non ou non entièrement reçu ou traité, un même bloc de données émis par une autre station de base.

**5.** Groupe de stations de base avec :

- respectivement un dispositif émetteur pour envoyer des blocs de données A, B, C, D à au moins une station d'usager ; et
- respectivement un dispositif processeur pour commander le dispositif émetteur de manière telle que des blocs de données qui sont émis par une première station de base de l'ensemble de stations de base sont également envoyés par au moins une autre station de base du groupe de stations de base à des stations d'usagers ;
**caractérisé en ce que** :
- des blocs de données A, B, C, D sont émis par la première station de base du groupe de stations de base dans un premier ordre prédéfini ; et
- des blocs de données A, B, C, D sont émis par une deuxième station de base du groupe de stations de base dans un deuxième ordre prédéfini ; et
- des blocs de données A, B, C, D sont émis par une troisième station de base du groupe de stations de base dans un troisième ordre prédéfini ; et
- des blocs de données A, B, C, D sont émis par une quatrième station de base du groupe de stations de base dans un quatrième ordre prédéfini ;

les séquences étant décrites ou pouvant être décrites comme suit :

séquence 1 : A B C D    A B C D    A B C D
séquence 2 : B A D C    D C B A    C D A B
séquence 3 : C D A B    B A D C    D C B A
séquence 4 : D C B A    C D A B    B A D C

ou

séquence 1 : A B C D    A B C D    A B C D
séquence 2 : B A D C    C D B A    C D B A
séquence 3 : C D B A    B A D C    D C A B
séquence 4 : D C A B    D C A B    B A D C

ou

séquence 1 : A B C D    A B C D    A B C D
séquence 2 : B A D C    C D B A    D C A B
séquence 3 : C D B A    B A D C    C D B A
séquence 4 : D C A B    D C A B    B A D C

ou

séquence 1 : A B C D    A B C D    A B C D
séquence 2 : B A D C    C D B A    D C A B
séquence 3 : C D B A    D C A B    B A D C
séquence 4 : D C A B    B A D C    C D B A

ou

séquence 1 : A B C D    A B C D    A B C D
séquence 2 : B A D C    D C A B    D C A B
séquence 3 : C D B A    B A D C    C D B A
séquence 4 : D C A B    C D B A    B A D C

ou

```
séquence 1 :   A B C D    A B C D    A B C D
séquence 2 :   B A D C    B A D C    C D A B
séquence 3 :   C D A B    D C B A    B A D C
séquence 4 :   D C B A    C D A B    D C B A
```

ou

```
séquence 1 :   A B C D    A B C D    A B C D
séquence 2 :   B A D C    B A D C    C D A B
séquence 3 :   C D A B    D C B A    D C B A
séquence 4 :   D C B A    C D A B    B A D C
```

ou

```
séquence 1 :   A B C D    A B C D    A B C D
séquence 2 :   B A D C    C D A B    D C B A
séquence 3 :   C D A B    B A D C    B A D C
séquence 4 :   D C B A    D C B A    C D A B
```

ou

```
séquence 1 :   A B C D    A B C D    A B C D
séquence 2 :   B A D C    C D B A    C D B A
séquence 3 :   C D A B    B A D C    B A D C
séquence 4 :   D C B A    D C A B    D C A B
```

ou

```
séquence 1 :   A B C D    A B C D    A B C D
séquence 2 :   B A D C    C D B A    D C A B
séquence 3 :   C D A B    B A D C    B A D C
séquence 4 :   D C B A    D C A B    C D B A
```

ou

```
séquence 1 :   A B C D    A B C D    A B C D
séquence 2 :   B A D C    D C A B    C D B A
séquence 3 :   C D A B    B A D C    B A D C
séquence 4 :   D C B A    C D B A    D C A B
```

ou

```
séquence 1 :   A B C D    A B C D    A B C D
séquence 2 :   B A D C    D C A B    D C A B
séquence 3 :   C D A B    B A D C    B A D C
séquence 4 :   D C B A    C D B A    C D B A
```

ou

```
séquence 1 :   A B C D    A B C D    A B C D
séquence 2 :   A D C B    D C B A    C B D A
```

(suite)

séquence 3 :  B D A C     B D A C     D C A B
séquence 4 :  C D B A     C A D B     D B A C

ou

séquence 1 :  A B C D     A B C D     A B C D
séquence 2 :  A D C B     D C B A     C B D A
séquence 3 :  B D A C     C A D B     D C A B
séquence 4 :  C D B A     B D A C     D B A C

ou

séquence 1 :  A B C D     A B C D     A B C D
séquence 2 :  A D C B     D C B A     D A C B
séquence 3 :  B D A C     B D A C     C D B A
séquence 4 :  C D B A     C A D B     B D C A

ou

séquence 1 :  A B C D     A B C D     A B C D
séquence 2 :  A D C B     D C B A     D A C B
séquence 3 :  B D A C     C A D B     C D B A
séquence 4 :  C D B A     B D A C     B D C A

ou

séquence 1 :  A B C D     A B C D     A B C D
séquence 2 :  C B A D     D C B A     D A C B
séquence 3 :  B D A C     B D A C     C D B A
séquence 4 :  D C A B     C A D B     B D C A

ou

séquence 1 :  A B C D     A B C D     A B C D
séquence 2 :  C B A D     D C B A     D A C B
séquence 3 :  B D A C     C A D B     C D B A
séquence 4 :  D C A B     B D A C     B D C A

ou

séquence 1 :  A B C D     A B C D     A B C D
séquence 2 :  C B A D     D C B A     C B D A
séquence 3 :  B D A C     B D A C     D C A B
séquence 4 :  D C A B     C A D B     D B A C

ou

séquence 1 :  A B C D     A B C D     A B C D
séquence 2 :  C B A D     D C B A     C B D A
séquence 3 :  B D A C     C A D B     D C A B

(suite)

séquence 4 :   D C A B    B D A C    D B A C.

**6.** Station d'usager avec :

- un dispositif récepteur pour recevoir des blocs de données de différentes stations de base ; et
- un dispositif processeur pour commander le dispositif récepteur de manière telle que, si un bloc de données émis par une première station de base d'un groupe de stations de base n'est pas ou pas entièrement reçu ou traité par la station d'usager, le dispositif récepteur est commuté sur la réception du même bloc de données émis par une autre station de base du groupe de stations de base et ce bloc de données est utilisé pour reconstruire le bloc de données ;
**caractérisée en ce que** :
- les blocs de données A, B, C, D sont émis par la première station de base du groupe de stations de base dans un premier ordre prédéfini ; et
- les blocs de données A, B, C, D sont émis par une deuxième station de base du groupe de stations de base dans un deuxième ordre prédéfini ; et
- les blocs de données A, B, C, D sont émis par une troisième station de base du groupe de stations de base dans un troisième ordre prédéfini ; et
- les blocs de données A, B, C, D sont émis par une quatrième station de base du groupe de stations de base dans un quatrième ordre prédéfini ;

les séquences étant décrites ou pouvant être décrites comme suit :

séquence 1 :   A B C D    A B C D    A B C D
séquence 2 :   B A D C    D C B A    C D A B
séquence 3 :   C D A B    B A D C    D C B A
séquence 4 :   D C B A    C D A B    B A D C

ou

séquence 1 :   A B C D    A B C D    A B C D
séquence 2 :   B A D C    C D B A    C D B A
séquence 3 :   C D B A    B A D C    D C A B
séquence 4 :   D C A B    D C A B    B A D C

ou

séquence 1 :   A B C D    A B C D    A B C D
séquence 2 :   B A D C    C D B A    D C A B
séquence 3 :   C D B A    B A D C    C D B A
séquence 4 :   D C A B    D C A B    B A D C

ou

séquence 1 :   A B C D    A B C D    A B C D
séquence 2 :   B A D C    C D B A    D C A B
séquence 3 :   C D B A    D C A B    B A D C
séquence 4 :   D C A B    B A D C    C D B A

ou

séquence 1 :   A B C D    A B C D    A B C D
séquence 2 :   B A D C    D C A B    D C A B

(suite)

```
séquence 3 :   C D B A    B A D C    C D B A
séquence 4 :   D C A B    C D B A    B A D C
```

ou

```
séquence 1 :   A B C D    A B C D    A B C D
séquence 2 :   B A D C    B A D C    C D A B
séquence 3 :   C D A B    D C B A    B A D C
séquence 4 :   D C B A    C D A B    D C B A
```

ou

```
séquence 1 :   A B C D    A B C D    A B C D
séquence 2 :   B A D C    B A D C    C D A B
séquence 3 :   C D A B    D C B A    D C B A
séquence 4 :   D C B A    C D A B    B A D C
```

ou

```
séquence 1 :   A B C D    A B C D    A B C D
séquence 2 :   B A D C    C D A B    D C B A
séquence 3 :   C D A B    B A D C    B A D C
séquence 4 :   D C B A    D C B A    C D A B
```

ou

```
séquence 1 :   A B C D    A B C D    A B C D
séquence 2 :   B A D C    C D B A    C D B A
séquence 3 :   C D A B    B A D C    B A D C
séquence 4 :   D C B A    D C A B    D C A B
```

ou

```
séquence 1 :   A B C D    A B C D    A B C D
séquence 2 :   B A D C    C D B A    D C A B
séquence 3 :   C D A B    B A D C    B A D C
séquence 4 :   D C B A    D C A B    C D B A
```

ou

```
séquence 1 :   A B C D    A B C D    A B C D
séquence 2 :   B A D C    D C A B    C D B A
séquence 3 :   C D A B    B A D C    B A D C
séquence 4 :   D C B A    C D B A    D C A B
```

ou

```
séquence 1 :   A B C D    A B C D    A B C D
séquence 2 :   B A D C    D C A B    D C A B
séquence 3 :   C D A B    B A D C    B A D C
séquence 4 :   D C B A    C D B A    C D B A
```

ou

| | | | |
|---|---|---|---|
| séquence 1 : | A B C D | A B C D | A B C D |
| séquence 2 : | A D C B | D C B A | C B D A |
| séquence 3 : | B D A C | B D A C | D C A B |
| séquence 4 : | C D B A | C A D B | D B A C |

ou

| | | | |
|---|---|---|---|
| séquence 1 : | A B C D | A B C D | A B C D |
| séquence 2 : | A D C B | D C B A | C B D A |
| séquence 3 : | B D A C | C A D B | D C A B |
| séquence 4 : | C D B A | B D A C | D B A C |

ou

| | | | |
|---|---|---|---|
| séquence 1 : | A B C D | A B C D | A B C D |
| séquence 2 : | A D C B | D C B A | D A C B |
| séquence 3 : | B D A C | B D A C | C D B A |
| séquence 4 : | C D B A | C A D B | B D C A |

ou

| | | | |
|---|---|---|---|
| séquence 1 : | A B C D | A B C D | A B C D |
| séquence 2 : | A D C B | D C B A | D A C B |
| séquence 3 : | B D A C | C A D B | C D B A |
| séquence 4 : | C D B A | B D A C | B D C A |

ou

| | | | |
|---|---|---|---|
| séquence 1 : | A B C D | A B C D | A B C D |
| séquence 2 : | C B A D | D C B A | D A C B |
| séquence 3 : | B D A C | B D A C | C D B A |
| séquence 4 : | D C A B | C A D B | B D C A |

ou

| | | | |
|---|---|---|---|
| séquence 1 : | A B C D | A B C D | A B C D |
| séquence 2 : | C B A D | D C B A | D A C B |
| séquence 3 : | B D A C | C A D B | C D B A |
| séquence 4 : | D C A B | B D A C | B D C A |

ou

| | | | |
|---|---|---|---|
| séquence 1 : | A B C D | A B C D | A B C D |
| séquence 2 : | C B A D | D C B A | C B D A |
| séquence 3 : | B D A C | B D A C | D C A B |
| séquence 4 : | D C A B | C A D B | D B A C |

ou

```
séquence 1 :    A B C D    A B C D    A B C D
séquence 2 :    C B A D    D C B A    C B D A
séquence 3 :    B D A C    C A D B    D C A B
séquence 4 :    D C A B    B D A C    D B A C.
```

# FIG 1

Node B1          Node B2

UE

# FIG 2

Stand der Technik

cd  G                    cd  G

P

fr  frc    fr      fr      fr  frc

t

# FIG 3

Übertragungslückenmusterlänge

10 ms
DPCH

7-Schlitz-Übertragungslückenlänge

80 ms TTI

GSM RSSI
FDD CPICH
BSIC ID
BSIC Conf.

# FIG 4

### Stand der Technik

FACH-
Messungen

320 ms

80 ms TTI

S-CCPCH

# FIG 5

Node B1  A | B | C | D | A | B | C | D | A | B | C | D

Node B2  B | A | D | C | D | C | B | A | C | D | A | B

DRX

# FIG 6

Node B1  A | B | C | D | A | B | C | D | A | B | C | D

Node B2  B | A | D | C | D | C | B | A | C | D | A | B

power off

## FIG 7

## FIG 8

## FIG 9

| Node B1 | A | B | C | D | A | B | C | D | A | B | C | D |

| Node B2 | A | D | C | B | D | C | B | A | C | B | | A |

| Node B2 shifted +1 TTI | A | D | C | B | D | C | B | A | C | B | D | A |

| shifted -1 TTI | A | D | C | B | D | C | B | A | C | B | D | A |

L          L

## FIG 10

Legend:
- 1Link DRX 10/80
- 1Link no DRX
- 2L DRX 12tuple TTIR
- 2L PCH state
- 2L DRX worst

BLER vs $E_c / I_{or}$ in dB

6.4 %  12.6 %  2.5 %  7.4 %  16.1 %  25.1 %  21.5 %  29.1 %  34.6 %  36.3 %  39.8 %  40.8 %  44.3 %  44.4 %  47.0 %

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19949610 A1
- WO 2005109675 A1